# EUROPEAN PATENT APPLICATION

(11) **EP 4 319 203 A1**
(43) Date of publication of application: **07.02.2024**
(21) Application number: 22774343.2
(22) Date of filing: 25.03.2022
(51) Int. Cl.: H04W 4/02

(54) **POSITIONING METHOD, TERMINAL, AND NETWORK SIDE DEVICE**

(30) Priority: 26.03.2021 CN 202110327009
(71) Applicant: Vivo Mobile Communication Co., Ltd., Dongguan, Guangdong 523863 (CN)
(72) Inventor: SI, Ye, Dongguan, Guangdong 523863 (CN); WANG, Yuanyuan, Dongguan, Guangdong 523863 (CN); ZHUANG, Zixun, Dongguan, Guangdong 523863 (CN); WU, Huaming, Dongguan, Guangdong 523863 (CN)
(74) Representative: Conti, Marco
(86) International application number: PCT/CN2022/083018
(87) International publication number: WO 2022/199689

(57) **Abstract**

This application discloses a positioning method, a terminal, and a network-side device, belonging to the technical field of wireless communications. The positioning method in the embodiments of this application includes: performing, by a terminal, a positioning behavior in an idle state or an inactive state, where performing the positioning behavior includes at least one of the following: receiving and measuring a downlink reference signal for positioning; reporting information related to location; and transmitting an uplink reference signal for positioning.

## Description

### CROSS-REFERENCE TO RELATED APPLICATIONS

This application claims the priority of Chinese Patent Application No. 202110327009.3 filed in China on March 26, 2021, the entire content of which is hereby incorporated by reference.

### TECHNICAL FIELD

This application belongs to the field of wireless communication technologies, and in particular, to a positioning method, a terminal, and a network-side device.

### BACKGROUND

In a current positioning method, a user equipment (User Equipment, UE) (the UE is also referred to as a terminal) needs to perform a positioning behavior in a radio resource control (Radio Resource Control, RRC) connected state (connected state). If the terminal is in an RRC idle state (idle state) or an RRC inactive state (inactive state), the positioning behavior can be performed only after entering the RRC connected state.

A power-saving scheme of the terminal is one of the remarkable directions. If the terminal must perform the positioning behavior in the RRC connected state, power saving will not be facilitated.

### SUMMARY

Embodiments of this application provide a positioning method, a terminal, and a network-side device, which can solve the problem that the terminal may perform a positioning behavior only in an RRC connected state, thus not facilitating power saving.

According to a first aspect, a positioning method is provided, including:
performing, by a terminal, a positioning behavior in an idle state or an inactive state, where performing the positioning behavior includes at least one of the following:
receiving and measuring a downlink reference signal for positioning;
reporting information related to location; and
transmitting an uplink reference signal for positioning.

According to a second aspect, a positioning method is provided, including:
performing, by a terminal, a positioning behavior in an idle state, an inactive state, or a connected state, where performing the positioning behavior includes: reporting information related to location, the information related to location including an association relation between a positioning measurement result and a timing error group, and/or, an association relation between an uplink reference signal for positioning and the timing error group.

According to a third aspect, a positioning method is provided, including:
performing, by a network-side device, a positioning behavior, where performing the positioning behavior includes at least one of the following:
transmitting a downlink reference signal for positioning to a terminal in an idle state or an inactive state;
receiving information related to location reported by the terminal in the idle state or the inactive state; and
measuring an uplink reference signal for positioning transmitted by the terminal in the idle state or the inactive state.

According to a fourth aspect, a positioning method is provided, including:
performing, by a network-side device, a positioning behavior, where performing the positioning behavior includes:
receiving information related to location reported by a terminal in an idle state or an inactive state, the information related to location including an association relation between a positioning measurement result and a timing error group, and/or, an association relation between an uplink reference signal for positioning and the timing error group.

According to a fifth aspect, a positioning apparatus is provided, including:
a positioning module, configured to perform a positioning behavior in an idle state or an inactive state, where performing the positioning behavior includes at least one of the following:
receiving and measuring a downlink reference signal for positioning;
reporting information related to location; and
transmitting an uplink reference signal for positioning.

According to a sixth aspect, a positioning apparatus is provided, including:
a positioning module, configured to perform a positioning behavior in an idle state, an inactive state, or a connected state, where performing the positioning behavior includes:
reporting information related to location, the information related to location including an association relation between a positioning measurement result and a timing error group, and/or, an association relation between an uplink reference signal for positioning and the timing error group.

According to a seventh aspect, a positioning apparatus is provided, including:
a positioning module, configured to perform a positioning behavior, where performing the positioning behavior includes at least one of the following:
transmitting a downlink reference signal for positioning to a terminal in an idle state or an inactive state;
receiving information related to location reported by the terminal in the idle state or the inactive state; and
measuring an uplink reference signal for positioning transmitted by the terminal in the idle state or the inactive state.

According to an eighth aspect, a positioning apparatus is provided, including:
a positioning module, configured to perform a positioning behavior, where performing the positioning behavior includes:
receiving information related to location reported by a terminal in an idle state or an inactive state, the information related to location including an association relation between a positioning measurement result and a timing error group, and/or, an association relation between an uplink reference signal for positioning and the timing error group.

According to a ninth aspect, a terminal is provided. The terminal includes a processor, a memory, and programs or instructions stored in the memory and executable on the processor. The programs or instructions, when executed by the processor, implement steps of the method as described in the first aspect or the second aspect.

According to a tenth aspect, a terminal is provided, including a processor and a communication interface. The processor is configured to perform a positioning behavior in an idle state or an inactive state, where performing the positioning behavior includes at least one of the following:
receiving and measuring a downlink reference signal for positioning;
reporting information related to location; and
transmitting an uplink reference signal for positioning.

According to an eleventh aspect, a terminal is provided, including a processor and a communication interface. The processor is configured to perform a positioning behavior in an idle state, an inactive state, or a connected state, where performing the positioning behavior includes:

reporting information related to location, the information related to location including an association relation between a positioning measurement result and a timing error group, and/or, an association relation between an uplink reference signal for positioning and the timing error group.

According to a twelfth aspect, a network-side device is provided. The network-side device includes a processor, a memory, and programs or instructions stored in the memory and executable on the processor. The programs or instructions, when executed by the processor, implement steps of the method as described in the second aspect.

According to a thirteenth aspect, a network-side device is provided, including a processor and a communication interface. The processor is configured to perform a positioning behavior, where performing the positioning behavior includes at least one of the following:
transmitting a downlink reference signal for positioning to a terminal in an idle state or an inactive state;
receiving information related to location reported by the terminal in the idle state or the inactive state; and
measuring an uplink reference signal for positioning transmitted by the terminal in the idle state or the inactive state.

According to a thirteenth aspect, a network-side device is provided, including a processor and a communication interface. The processor is configured to perform a positioning behavior, where performing the positioning behavior includes:
receiving information related to location reported by a terminal in an idle state or an inactive state, the information related to location including an association relation between a positioning measurement result and a timing error group, and/or, an association relation between an uplink reference signal for positioning and the timing error group.

According to a fourteenth aspect, a readable storage medium is provided. The readable storage medium stores programs or instructions. The programs or instructions, when executed by a processor, implement steps of the method as described in the first aspect or the second aspect or the third aspect or the fourth aspect.

According to a fifteenth aspect, a chip is provided. The chip includes a processor and a communication interface. The communication interface is coupled to the processor. The processor is configured to execute programs or instructions to implement the method as described in the first aspect or the second aspect or the third aspect or the fourth aspect.

According to a sixteenth aspect, a computer program/program product is provided. The computer program/program product is stored in a non-transient storage medium. The program/program product is executed by at least one processor to implement steps of the positioning method as described in the first aspect or the second aspect or the third aspect or the fourth aspect.

In the embodiments of this application, a positioning function is performed in an RRC inactive state or an RRC idle state to ensure positioning performance and low power consumption.

### BRIEF DESCRIPTION OF THE DRAWINGS

FIG. 1 is a block diagram of a wireless communication system to which embodiments of this application may be applied;
FIG. 2 is a schematic diagram of a relation among an idle state, an inactive state, and a connected state;
FIG. 3 is a schematic diagram of a method for determining an advance amount of timing advance;
FIG. 4 is a schematic flowchart of 2-step RACH;
FIG. 5 is a schematic flowchart of an uplink positioning process;
FIG. 6 is a schematic flowchart of a positioning method performed by a terminal according to an embodiment of this application;
FIG. 7 is a schematic flowchart of a positioning method performed by a network-side device according to an embodiment of this application;
FIG. 8 is a schematic structural diagram of a positioning apparatus according to an embodiment of this application;
FIG. 9 is a schematic structural diagram of a positioning apparatus according to another embodiment of this application;
FIG. 10 is a schematic structural diagram of a communication device according to an embodiment of this application;
FIG. 11 is a schematic diagram of a hardware structure of a terminal according to an embodiment of this application; and
FIG. 12 is a schematic diagram of a hardware structure of a network-side device according to an embodiment of this application.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by a person skilled in the art based on the embodiments of this application fall within the protection scope of this application.

The terms "first" and "second" in the specification and claims of this application are used to distinguish similar objects, but are unnecessarily used to describe a specific sequence or order. It is to be understood that the terms used in this way are exchangeable in a proper case, so that the embodiments of this application described herein can be implemented in an order different from the order shown or described herein. The objects distinguished by "first" and "second" are generally in one class, and the number of objects is not limited. For example, there may be one or more first objects. In addition, "and/or" in the specification and claims represents at least one of the connected objects, and the character "/" generally represents that the associated objects are in an "or" relation.

It is to be noted that the technologies described in this application are not limited to a long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably. The technology described may be applied to the systems and radio technologies mentioned above, and may also be applied to other systems and radio technologies. The following description describes a new radio (New Radio, NR) system for example purposes and uses the NR term in most of the following descriptions, but these technologies may also be applied to applications other than NR system applications, such as 6^{th} generation (6^{th} Generation, 6G) communication systems.

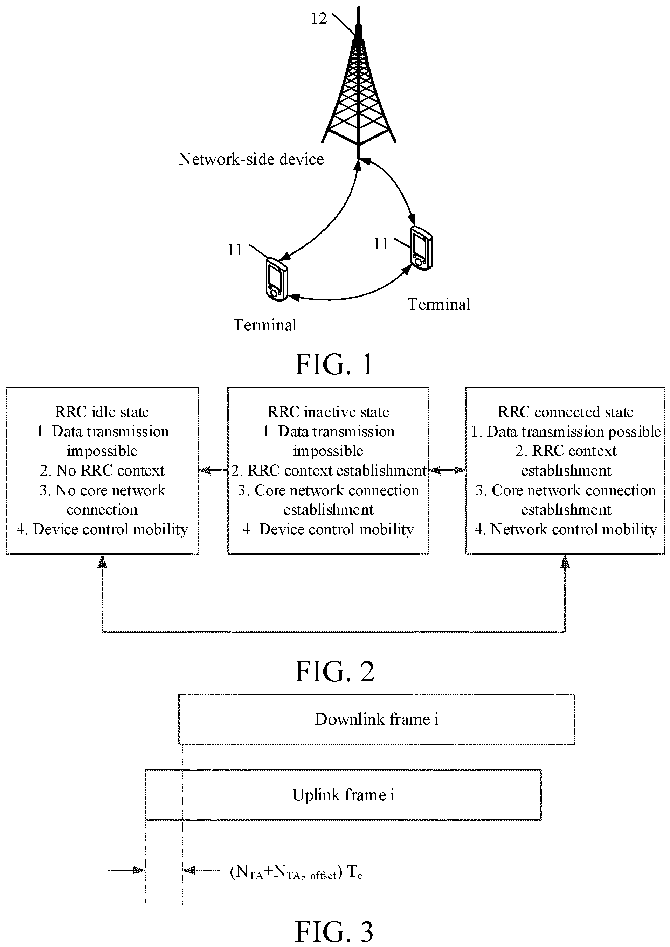

FIG. 1 shows a block diagram of a wireless communication system to which embodiments of this application may be applied. The wireless communication system includes a terminal 11 and a network-side device 12. The terminal 11 may also be referred to as a terminal device or a user equipment (User Equipment, UE). The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), a wearable device (Wearable Device), or a vehicle user equipment (VLTE), and a pedestrian user equipment (PUE). The wearable device includes: smart watches, bracelets, headphones, glasses, and the like. It is to be noted that the specific type of the terminal 11 is not limited in the embodiments of this application. The network-side device 12 may be a base station or a core network. The base station may be referred to as Node B, Evolved Node B, an access point, a base transceiver station (Base Transceiver Station, BTS), a radio base station, a radio transceiver, a basic service set (Basic Service Set, BSS), an extended service set (Extended Service Set, ESS), Node B, Evolved Node B (eNB), Home Node B, Home Evolved Node B, a wireless local area network (Wireless Local Area Network, WLAN) access point, a WiFi node, a transmitting receiving point (Transmitting Receiving Point, TRP), or some other suitable term in the art. The base station is not limited to a particular technical vocabulary as long as the same technical effect is achieved. It is to be noted that only a base station in an NR system is used as an example in the embodiments of this application, but a specific type of the base station is not limited. Optionally, a core network device may be a location server, such as a location server in NR (such as a location management function (Location Management Function, LMF)), although the location server in the present invention is not limited to the NR version.

First, the technical contents related to the technical solution of this application are explained.

### 1. RRC idle state (Idle state), RRC inactive state (Inactive state), and RRC connected state (connected state)

For convenience of illustration, the RRC idle state is hereinafter referred to as an idle state, the RRC inactive state is hereinafter referred to as an inactive state, and the RRC connected state is hereinafter referred to as a connected state.

A UE in the idle state has no RRC context in the network-side device. That is, parameters necessary for communication between the network-side device and the LTE do not belong to a specific cell, and the network-side device does not determine whether the UE exists. The UE is allocated with a group of tracking area identifiers (Tracking area identifier, TAI). From the perspective of a core network, a radio access network (Access Network, RAN) and the core network have been disconnected. In order to reduce power consumption, the UE is in a sleep state most of the time, and therefore data transmission cannot be performed. In the downlink, the UE in the idle state may periodically wake up to receive paging messages (if any) from the network. Mobility (Mobility) may be processed by cell reselection by the UE. In the idle state, the UE and the network-side device will not keep uplink synchronization. In order for transition from the idle state to the connected state, RRC context is established only between the UE and the network-side device through a random access (Random Access).

In the connected state, the RRC context may be established, and all parameters required for communication are known to two entities (the UE and the network-side device). From the perspective of the core network, the UE is in a core network connected (CN_Connected) state. A cell to which the LTE belongs is known, and a transmission signaling destination device identifier between the LTE and the network-side device, namely a cell radio network temporary identifier (Cell Radio Network Temporary Identifier, C-RNTI), has been configured. In the connected state, the mobility (Mobility) may be controlled by the network-side device. That is, the UE provides neighboring cell measurement to the network-side device, and the network-side device commands the UE to perform handover. Uplink time synchronization may or may not exist, and uplink synchronization may be established by using the random access when there is data to be transmitted.

In a long term evolution (Long Term Evolution, LTE), only the idle state and the connected state are supported. In practice, it is common to use the idle state as a main sleep state of the UE to save power. However, due to the frequent transmission of small data packets in some cases, there will be a large number of transitions from the idle state to the connected state according to an LTE manner. These transitions increase signaling load and signaling delay. Therefore, in order to reduce signaling load and waiting time, the inactive state is introduced in new radio (New Radio, NR).

In the inactive state, the RRC context between the network-side device and the UE is maintained. From the perspective of the core network, the connection between the RAN and the core network is in a state. Therefore, the transition from the inactive state to the connected state is fast, and core network signaling is not required. At the same time, the UE is allowed to sleep in a similar manner to the idle state, and the mobility is processed by cell reselection. Therefore, the inactive state may be regarded as a mixture of the idle state and the connected state.

Referring to FIG. 2, FIG. 2 is a schematic diagram of a relation among an idle state, an inactive state, and a connected state. It can be seen that an important difference between different states is a mobility (mobility) mechanism involved. Efficient mobility processing is a key part of any mobile communication system. For the idle state and the inactive state, the mobility is processed by the UE through cell reselection, while for the connected state, the mobility is processed by the network-side device based on UE measurement.

The UE in the idle state and the UE in the inactive state commonly have the functions of public land mobile network (Public Land Mobile Network, PLMN) selection, cell selection and reselection, and system message reception. The differences include the following: (1) In the idle state, the core network only determines a tracking area (Tracking Area, TA) where the UE is located, but does not determine a specific primary cell identifier (pcell id). Therefore, paging will be issued in the tracking area or a tracking area list (list). However, in the inactive state, an NG-RAN determines a RNA corresponding to the UE, and therefore, the UE will be paged only in the RNA area. (2) UE access stratum (AS) context is stored in the UE and the NG-RNA in the inactive state. (3) The UE stores a non-access stratum (Non-Access Stratum, NAS) signaling connection under a control plane and a 5GC-NG-RAN connection under a user plane in the inactive state.

The LTE in the inactive state and the UE in the connected state have the following in common: (1) The UE access stratum context is stored in the UE and the NG-RNA in the inactive state. (2) The connection between the control plane and the user plane has been established, and therefore, the core network usually considers that the UE is in the connected state. The differences therebetween are as follows. (1) In the connected state, the NG-RAN determines a serving cell where the UE is located. However, in the inactive state, the NG-RAN determines a RNA corresponding to the UE, and therefore, the UE will be paged only in the RNA area. (2) In the inactive state, the UE has the functions of PLMN network searching, cell reselection, and system message reception. (3) In the connected state, the LTE has the functions of uplink and downlink channel transmission and mobility (handover).

Scenarios where the UE enters from the inactive state to the connected state include: there is data to be transmitted in the uplink; there is a signaling process to be initiated in the non-access stratum; there is a RAN paging response; the network is notified of having been away from a RAN notification area (notification area); a periodic RAN notification area update timer (notification area update timer) expires.

### 2. Uplink reference signal for positioning (SRS) in connected state

Time domain types of a sounding reference signal (Sounding Reference Signal, SRS) include periodic, aperiodic, and semi-persistent.

Each SRS resource (resource) configuration includes SRS configurations of comb2, comb4, and comb8. A comb number refers to the number of sub-carrier spacings between two adjacent SRS resources in a frequency domain, and corresponding maximum cyclic shifts (cyclic shift) are 8, 12, and 6, respectively. The SRS resource configuration further includes the number of symbols of SRS resources and an initial symbol. For the aperiodic SRS, the SRS resource configuration includes a slot offset (slot offset). For the semi-persistent and periodic SRSs, the SRS resource configuration includes a period and a slot offset, and the period is in slots. In addition, the SRS resource configuration further includes an SRS spatial relation SRS-SpatialRelationInfoPos. Reference signals in the spatial relation may be a synchronization signal block of a serving cell (Synchronization Signal and PBCH block, SSB), a channel state information reference signal (channel State Information Reference Signal, CSI-RS) and an SRS, and an SSB of a neighboring cell and a downlink reference signal for positioning (Positioning Reference Signal, PRS).

The SRS resource configuration may be referred to as follows:

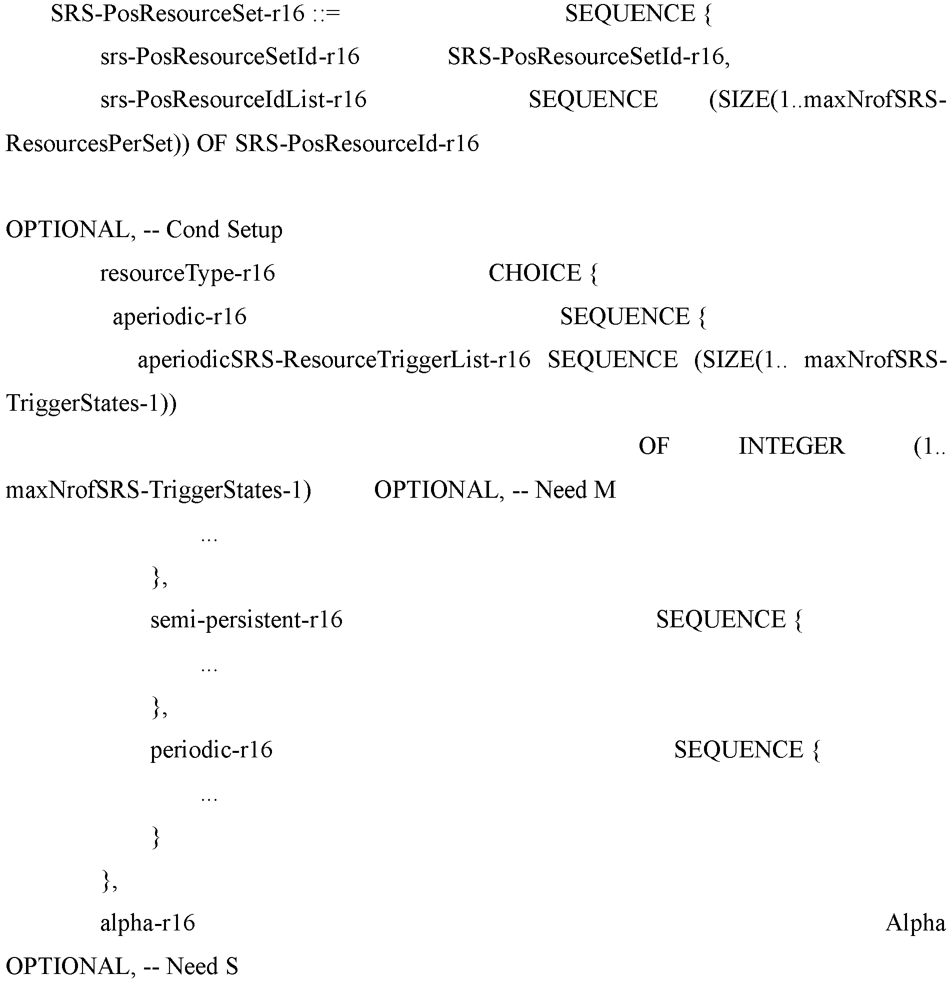

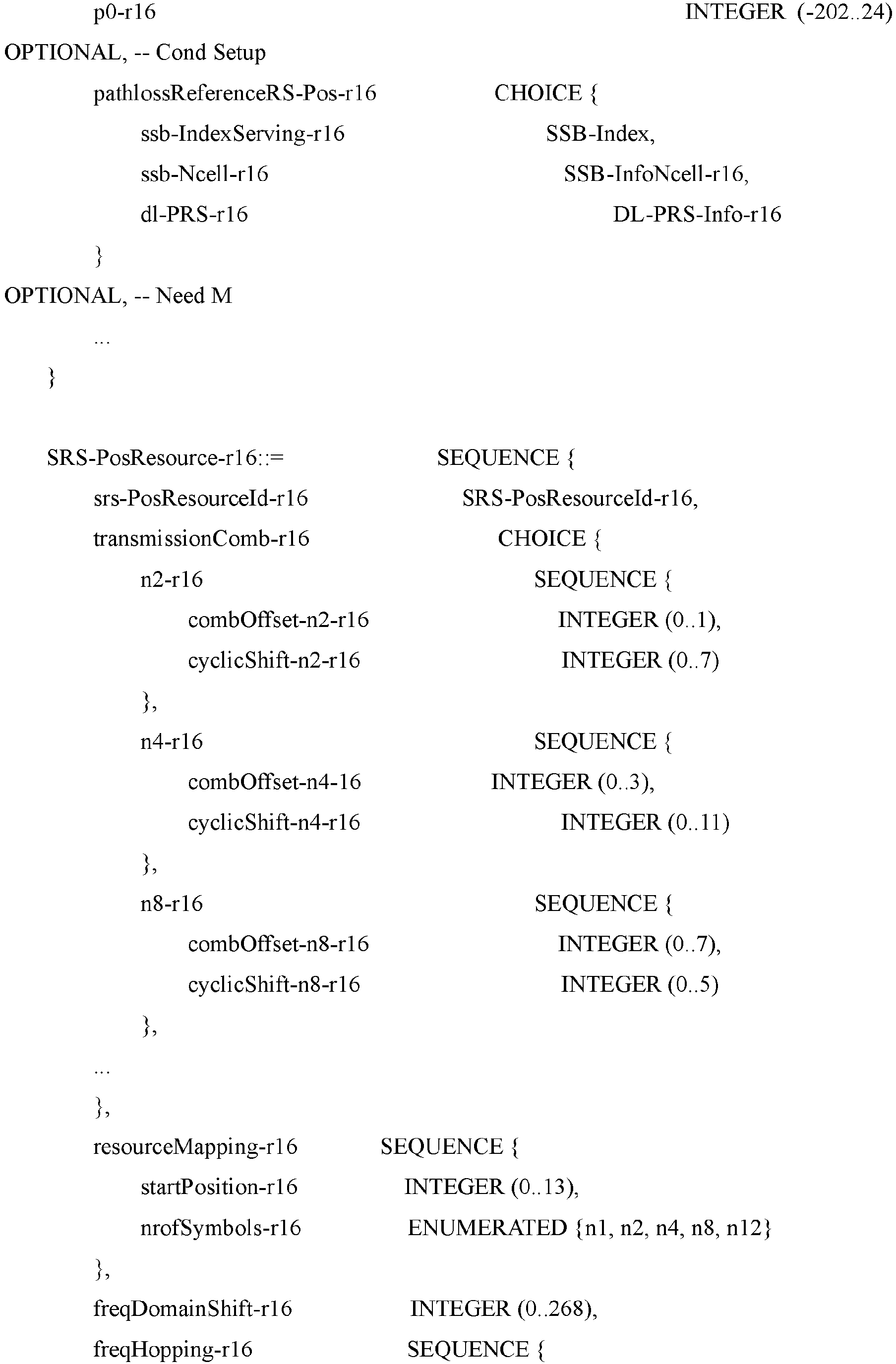

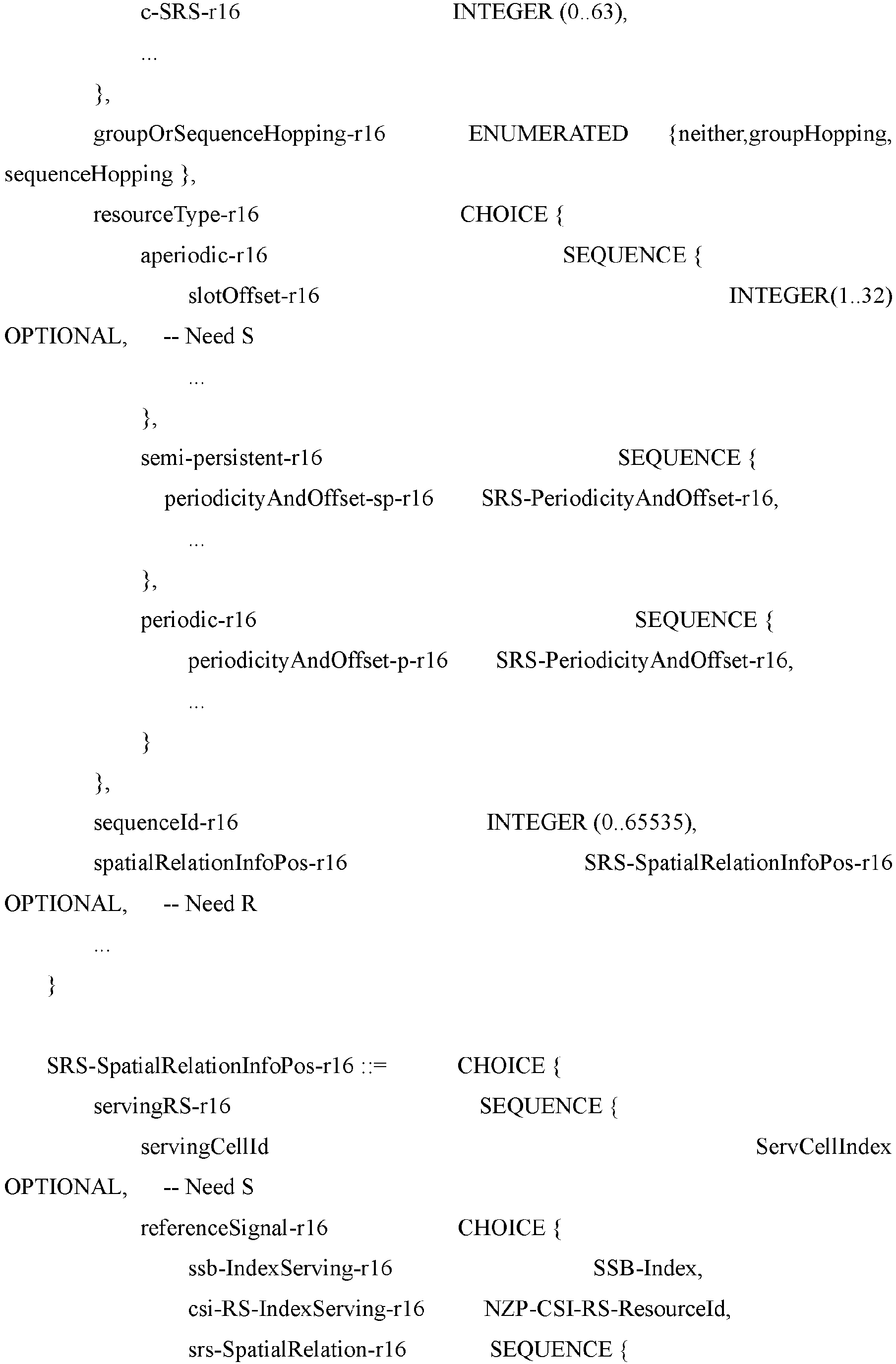

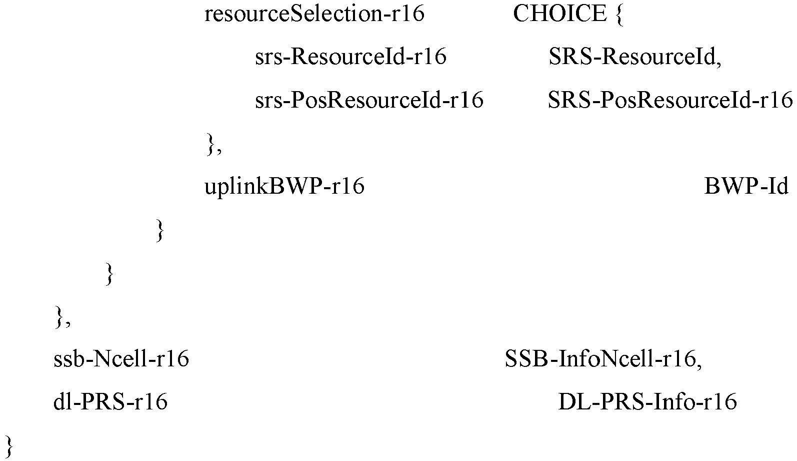

### 3. Timing advance (Timing Advance, TA)

Timing advance is used for uplink transmission of the UE, which means that a system frame of uplink data transmitted by the UE should be advanced by a certain time compared with a corresponding downlink frame. The specific advance amount is calculated by the base station according to a random access preamble (preamble) transmitted by the UE, and then notified to the LTE through a timing advance command (Timing Advance Command, TAC).

As shown in FIG. 3, N_{TA} is an amount parsed by the UE in the timing advance command, and N_{TA,offset} is notified to the UE by a parameter n-TimingAdvanceOffset. If the UE does not receive the parameter, a preset value is used. The preset value is a fixed value related to a multiplexing mode and a frequency range. The specific value is shown in Table 1:

**Table 1 Value of N_{TA offset}**

| Frequency range and band of cell for uplink transmission | *N_{TA,offset}* (Unit: TC) |
|---|---|
| FR1 | 25600 (Note 1) |
| Frequency division duplex (Frequency Division Duplex, FDD) or time division duplex (Time Division Duplex, TDD) band without evolved universal terrestrial radio access (Evolved Universal Terrestrial Radio Access, E-UTRA) NR-NR and narrow band Internet of Things (Narrow Band Internet of Things, NB-IoT)-NR coexistence | |
| FR1 | 0 (Note 1) |
| FDD band with E-UTRA-NR and/or NB-IoT-NR coexistence | |
| FR1 | 39936 (Note 1) |
| TDD band with E-UTRA-NR and/or NB-IoT-NR coexistence | |
| FR2 | 13792 |
| Note: The UE identifies *N_{TA,offset}* based on n-TimingAdvanceOffset information. If the n-TimingAdvanceOffset information is not provided to the UE, a default value of the FR1 band is set to 25600. In a case that there are multiple uplink (UpLink, UL) carriers in the same timing advance group (Timing Advance Group, TAG), the UE is expected to provide the same n-TimingAdvanceOffset value for all the UL carriers, and may also provide *N_{TA,offset}* with a value of 39936 for an FDD serving cell. | |

In the random access, the base station determines a timing advance value by measuring the received preamble and transmits the timing advance value to the LTE through a Timing Advance Command (TAC) in a random access response (Rach access response, RAR). The Timing Advance Command has a total of 12 bits, and an indication range is: T_{A} = 0,1,2, ...,3846. When a sub-carrier spacing is 2^u*15 kHz, N_{TA} is determined by the following formula: N_{TA} = T_{A} · 16 · 64/2^{µ}.

That is, in the NR, N_{TA} is also related to the sub-carrier spacing, which depends on a sub-carrier spacing of the first uplink transmission after receiving the RAR, namely Msg3.

Although the LTE completes the timing advance in the random access, the location of the UE may change with time, and therefore, the base station needs to maintain the timing advance constantly. For other cases, the indication range of the TAC is: T_{A} = 0,1,2, ...,63. N_{TA} is determined by the following formula: N_{TA_new} = N_{TA_old} + (T_{A} - 31) · 16 · 64/2^{µ}, where N_{TA_old} is N_{TA} used before the TAC is received, and N_{TA_new} is N_{TA} updated after the TAC is received.

4. 4-step random access channel (Random Access Channel, RACH) and 2-step RACH
1) The 4-step random access process includes: a contention-based random access process (four-step random access (4-step RACH) and a non-contention-based random access process.

For the "contention-based random access process", the UE transmits Msg1 (random access request) to the network-side device. After receiving Msg1, the network-side device transmits Msg2 (random access response (RAR) message to the UE. The message carries uplink grant (uplink grant) information. The UE transmits Msg3 according to the uplink grant in Msg2. After receiving Msg3, the network-side device transmits Msg4 (for example, contention resolution identifier) to the UE. The UE receives Msg4 and determines whether the contention resolution is successful. If successful, the random access process is successful. Otherwise, the random access process is re-initiated.

For the "non-contention-based random access process", the network-side device allocates dedicated RACH resources for the LTE to access, the LTE transmits Msg1 (random access request) to the network-side device on the dedicated resources, and the network-side device transmits the Msg2 (random access response RAR) message to the UE after receiving Msg1. However, when the dedicated RACH resources are insufficient, the network-side device will instruct the UE to initiate a contention-based RA.

### 2) 2-step RACH

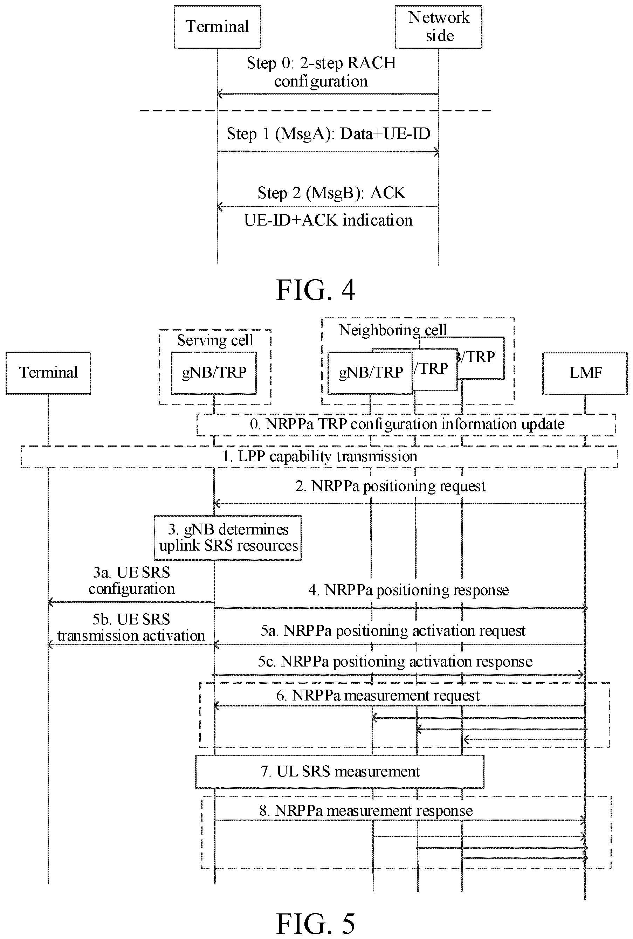

Referring to FIG. 4, the 2-step RACH includes the following steps:
Step 0: The network-side device configures configuration information of the 2-step RACH to the LTE, including, for example: transmitting resource information corresponding to MsgA and MsgB.
Step 1: The UE triggers the 2-step RACH process. Request information (MsgA) is transmitted to the network-side device, for example, via a physical uplink shared channel (Physical Uplink Shared Channel, PUSCH). At the same time, the LTE may also transmit physical random access channel (Physical Random Access Channel, PRACH) information to the network-side device.
Step 2: The network-side device transmits acknowledgement information (MsgB) to the UE. If the UE fails to receive MsgB, the UE re-transmits MsgA.

5. Uplink positioning process

As shown in FIG. 5, the uplink positioning process includes the following steps:
Step 0: An LMF and a gNB/TRP exchange configuration information.
Step 1: The LMF and the LTE interact ability information.
Step 2: The LMF transmits an NR position protocol A (NRPPa) positioning information request (Positioning information request) to the gNB/TRP.
Step 3-3a: The gNB/TRP determines uplink SRS resources and transmits an SRS configuration to the UE.
Step 4: The gNB/TRP transmits an NRPPa positioning response to the LMF.
Step 5a: The LMF transmits an NRPPa positioning activation request to the gNB/TRP.
Step 5b: The gNB/TRP activates UE SRS transmission.
Step 5c: The gNB/TRP transmits an NRPPa positioning activation response to the LMF.
Step 6: The LMF transmits an NRPPa measurement request to the gNB/TRP.
Step 7: The gNB/TRP performs UL SRS measurement.
Step 8: The gNB/TRP transmits an NRPPa measurement response to the LMF.

### 6. Small data transmission (Small Data Transmission, SDT)

According to the resources configured by the network-side device, when the UE is in an idle state or an inactive state, data may be directly transmitted to the network-side device by the following methods:
1) initially accessed Msg3 of a 4-step random access process;
2) initially accessed MsgA of a 2-step random access process; and
3) exclusive uplink PUSCH resources configured by the network (namely, pre-configured (pre-configured) PUSCH; or, preallocated uplink resource (Preallocated Uplink Resource, PUR)).

The network-side device may directly transmit the data to the LTE in the following manners:
1) initially accessed Msg4 of the 4-step random access process;
2) initially accessed MsgB of the 2-step random access process; and
3) downlink feedback resources corresponding to the exclusive uplink resources configured by the network.

### 7. On-demand (On-demand) PRS

The on-demand PRS is not introduced in an R-16 protocol, and the PRS is transmitted in the form of broadcast. PRS configuration is relatively fixed, and flexible change of the PRS configuration is not supported, which may cause some waste of resources. For example, a network device is configured with 128 PRSs with a large TRP transmitting bandwidth in a certain area. In this area, only a part of LTEs require high positioning accuracy, or only a part of UEs have positioning requirements. Therefore, it is not worthwhile to cover the whole area with a large-bandwidth PRS for this part of UEs. For another example, in order to reduce overhead, a small-bandwidth PRS is configured in a certain area, some UEs have strong positioning accuracy, delay requirements or power consumption requirements, and the existing protocols cannot support flexible configuration of the PRS that meets these UE requirements.

Starting from Rel-16 of the 3rd generation partnership project (3rd Generation Partnership Project, 3GPP), the on-demand PRS is introduced to flexibly increase or decrease the PRS configuration according to the positioning requirements for one or some LTEs. For example, in a simple example, the on-demand PRS configuration is set to multiple PRS configuration parameter sets (including period, bandwidth, frequency points, and the like), the transmission of some PRS parameter sets is turned off when not needed, and the transmission of some PRSs is turned on when needed.

In an R-17 phase, the on-demand PRS has been determined as part of the standardization.

The positioning method, the terminal, and the network-side device provided by the embodiments of this application will be described in detail with reference to the accompanying drawings through some embodiments and application scenarios thereof.

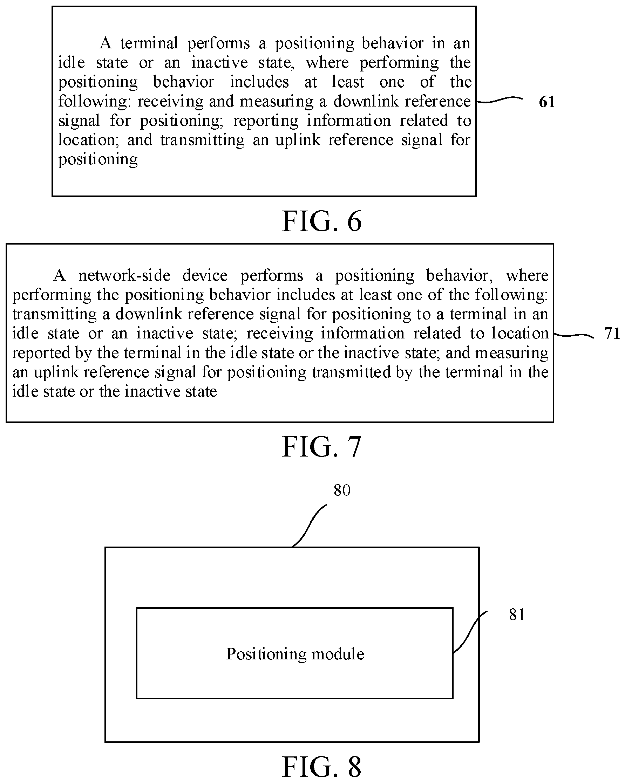

Referring to FIG. 6, the embodiments of this application provide a positioning method, including:
Step 61: A terminal performs a positioning behavior in an idle state or an inactive state, where performing the positioning behavior includes at least one of the following:
receiving and measuring a downlink reference signal for positioning;
reporting information related to location; and
transmitting an uplink reference signal for positioning.

Optionally, the information related to location includes, but is not limited to, at least one of the following: location information, a positioning measurement result, event information, an RRM measurement result, a downlink positioning measurement result, and/or an association relation between an uplink reference signal for positioning and a timing error group, and the like. The event information includes, but is not limited to, at least one of the following: an area event, an action event, and the like. The area event means that a UE detects that the LTE has entered, been away from, or is located within a specified target area (for example, area cell list/RNA/TAC). The action event means that the UE detects that the UE has moved from the previous position by more than a predefined linear distance.

In the embodiments of this application, a positioning function is developed by utilizing the characteristics of low energy consumption in the inactive state or the idle state to ensure positioning performance and low power consumption.

In the embodiments of this application, the positioning function is developed by utilizing the characteristics of low energy consumption in the inactive state or the idle state to ensure positioning performance and low power consumption.

A PRS may be regarded as a common signal at a cell level or an area level, and both a UE in a connected state and a UE in a non-connected state (idle state or inactive state) may share the same PRS in the same area. In the Rel-17 phase, it has been confirmed that an on-demand PRS will be introduced, and an LMF may turn on, turn off, or update configuration information of the PRS according to the requirements of the UE or the LMF. The on/off/update of the on-demand PRS will also affect receiving the PRS by the UE in the idle state or the inactive state. In general, the LTE may obtain PRS configuration information in the idle state or the inactive state by broadcast or unicast (for example, by RRC release signaling). When the network changes the configuration information of the PRS as required, for example, turning off the configuration information of the PRS, if the UE in the idle state or the inactive state is not notified in time, the LTE will "wake up" at the time of the original PRS configuration, so as to search and monitor the PRS, which will lead to wasted power consumption. Therefore, how to notify the LTE in the idle state or the inactive state of the on, off, or update of the configuration information of the PRS or the availability of the PRS is a problem to be solved.

In order to solve the foregoing problem, this application provides a method for notifying a terminal of configuration change of a reference signal for positioning without changing system information. The method includes: a network-side device initiates configuration update of the reference signal for positioning, and/or, the UE initiates configuration update of the reference signal for positioning. The methods will be described below respectively.

### 1. Configuration update of reference signal for positioning initiated by network-side device

In the embodiments of this application, optionally, the positioning method further includes: the terminal receives first indication information in the idle state or the inactive state, the first indication information including at least one of the following:
1) availability information of a reference signal for positioning or availability information of configuration information of the reference signal for positioning,
   where availability (availability) may also be represented as on or off information of the reference signal for positioning (or the configuration information of the reference signal for positioning); and
2) update information of the configuration information of the reference signal for positioning (the configuration information may also be referred to as auxiliary information).

The configuration information includes at least one of the following: spatial relation configuration, path loss configuration, and the like.

The reference signal for positioning includes at least one of the following: the uplink reference signal for positioning and the downlink reference signal for positioning. Optionally, the reference signal for positioning includes at least one of the following: PRS, uplink reference signal for positioning (SRS for positioning), CSI-RS, TRS, SSB, preamble, and the like.

In the embodiments of this application, the network-side device may determine whether to initiate configuration update of the reference signal for positioning according to at least one of the following conditions:
configuration update according to the on-demand PRS; and
maintenance (maintenance) of RRM measurement and report in the idle state or the inactive state by the UE, where the network-side device obtains a latest beam measurement result, and updates the configuration such as a spatial relation and/or a path loss.

In the embodiments of this application, optionally, after the terminal receives first indication information in the idle state or the inactive state, the method further includes:
in a case that the first indication information indicates that the reference signal for positioning is unavailable, the terminal assumes that the reference signal for positioning is not present, or that the reference signal for positioning is not transmitted, or that the reference signal for positioning is stopped from being transmitted, or that the terminal does not transmit the reference signal for positioning, or that the terminal stops transmitting the reference signal for positioning;
   or
in a case that the first indication information indicates that the configuration information of the reference signal for positioning is unavailable, the terminal assumes that the reference signal for positioning corresponding to the configuration information of the reference signal for positioning is not present, or that the reference signal for positioning corresponding to the configuration information of the reference signal for positioning is not transmitted, or that the reference signal for positioning corresponding to the configuration information of the reference signal for positioning is stopped from being transmitted, or that the terminal does not transmit the reference signal for positioning corresponding to the configuration information of the reference signal for positioning, or that the terminal stops transmitting the reference signal for positioning corresponding to the configuration information of the reference signal for positioning.

In the embodiments of this application, optionally, if the terminal assumes that the reference signal for positioning is not present, or that the reference signal for positioning is not transmitted, or that the reference signal for positioning is stopped from being transmitted, the terminal does not measure the reference signal for positioning.

In the embodiments of this application, optionally, the update information of the configuration information of the reference signal for positioning includes at least one of the following:
indication information for indicating whether the configuration information of the reference signal for positioning is updated; and
updated configuration information of the reference signal for positioning.

In the embodiments of this application, optionally, the indication information for indicating whether the configuration information of the reference signal for positioning is updated or the updated configuration information of the reference signal for positioning includes at least one of the following:
on or off of the configuration information of the reference signal for positioning;
increase or decrease of a bandwidth of the reference signal for positioning;
increase or decrease of a period of the reference signal for positioning;
change of muting (muting) configuration of the reference signal for positioning;
change of spatial relation configuration of the reference signal for positioning; and
change of path loss configuration of the reference signal for positioning.

The on or off of the configuration information of the reference signal for positioning means setting a switch to control 'on/off (on/off)' of the configuration information of the reference signal for positioning. If the switch is set to 'on', the configuration information of the reference signal for positioning is turned on. If the switch is set to 'off', the configuration information of the reference signal for positioning is turned off. Definitely, 'on/off (on/off)' may also be represented with 'enable (enable)' or 'not enable'.

In the embodiments of this application, optionally, the reference signal for positioning indicated by the first indication information is one of the following granularities:
reference signals for positioning corresponding to one or more groups of the configuration information of the reference signal for positioning;
one or more reference signal for positioning resources;
one or more reference signal for positioning resource sets;
one or more reference signals for positioning under a TRP, such as PRSs;
reference signals for positioning under one or more frequency layers (frequency layer), such as PRSs; and
reference signals for positioning under all frequency layers, such as PRSs.

In the embodiments of this application, receiving, by the terminal, the first indication information in the idle state or the inactive state includes at least one of the following:
1) The terminal obtains the first indication information in a paging physical downlink control channel (Physical downlink control channel, PDCCH).

In the embodiments of this application, optionally, the first indication information is represented by a bit of a short message (short message) in the paging PDCCH or by a reserved (reserved) bit in the paging PDCCH.

2) The terminal obtains the first indication information in a paging physical downlink shared channel (Physical downlink shared channel, PDSCH) scheduled by the paging PDCCH.

In an implementation, optionally, the terminal obtains indication information for indicating whether the configuration information of the reference signal for positioning is updated in the paging PDCCH, or obtains updated configuration information of the reference signal for positioning in the paging PDSCH scheduled by the paging PDCCH.

Optionally, the paging PDCCH is a PDCCH scheduling a paging message. That is, the paging PDSCH may carry the first indication information if and only if the paging PDCCH schedules the paging message.

3) The terminal obtains the first indication information in a paging early indication (Paging early indication, PEI).

The paging early indication may be interpreted as a paging wake-up signal.

4) The terminal obtains the first indication information during a random access process or a small data transmission process. For example, the first indication information is obtained during a random access process of mobile terminated (Mobile Terminated, MT) data transmission or a small data transmission process.

For example, the first indication information is carried by a message of a random access (RACH) process. The message of the random access process includes one of the following: Msg2, Msg4, and MsgB.

5) The terminal obtains the first indication information in a broadcast message.

The broadcast message is, for example, a system information block (System Information Block, SIB) message.

6) The terminal obtains the first indication information in an RRC release message.

In the embodiments of this application, optionally, obtaining the first indication information in the RRC release message includes:
the terminal obtains the first indication information in the RRC release message after reporting the information related to location, so as to indicate a subsequent configuration situation of the reference signal for positioning.

7) The terminal obtains the first indication information in a PDCCH and/or a PDSCH according to a downlink monitoring occasion and/or a monitoring window configured by the network-side device.

In an implementation, optionally, obtaining the first indication information in the PDCCH and/or the PDSCH according to the downlink monitoring occasion and/or the monitoring window configured by the network-side device includes:
the terminal obtains the first indication information in a PDCCH scrambled by a C-RNTI and/or a PDSCH scheduled by the PDCCH scrambled by the C-RNTI.

In the embodiments of this application, optionally, obtaining the first indication information in the PDCCH scrambled by the C-RNTI and/or the PDSCH scheduled by the PDCCH scrambled by the C-RNTI includes:
after reporting the information related to location, the terminal obtains indication information for indicating whether the configuration information of the reference signal for positioning is updated in the PDCCH scrambled by the C-RNTI, or obtains updated configuration information of the reference signal for positioning in the PDSCH scheduled by the PDCCH scrambled by the C-RNTI;
   or
after reporting the information related to location, the terminal obtains the first indication information in the PDSCH scheduled by the PDCCH scrambled by the C-RNTI.

The first indication information is obtained by the PDCCH scrambled by the C-RNTI and/or the PDSCH scheduled by the PDCCH scrambled by the C-RNTI after a contention resolution success message and before the RRC release message.

8) The terminal obtains the first indication information from a downlink scheduling resource (for example, a semi-persistent scheduling (Semi-Persistent Scheduling, SPS) resource) PDSCH configured by the network-side device.

In the embodiments of this application, optionally, the first indication information further includes indication information for indicating whether to enter a connected state and to update the configuration information of the reference signal for positioning.

In the embodiments of this application, optionally, receiving, by the terminal, the first indication information in the idle state or the inactive state further includes:
in a case that the first indication information includes the indication information for indicating whether to enter the connected state and to update the configuration information of the reference signal for positioning or the first indication information does not include indication information for indicating that the connected state is not entered to update the configuration information of the reference signal for positioning, the terminal initiates a random access to enter the connected state and to update the configuration information of the reference signal for positioning.

Optionally, the condition that the first indication information does not include indication information for indicating that the connected state is not entered to update the configuration information of the reference signal for positioning may be configured by default.

In some embodiments of this application, optionally, after the terminal receives first indication information in the idle state or the inactive state, the method further includes:
in a case that the first indication information includes indication information for indicating that the connected state is not entered to update the configuration information of the reference signal for positioning, the terminal transmits first feedback information, the first feedback information being used for indicating that the first indication information has been received.

In some other embodiments of this application, optionally, after the terminal receives first indication information in the idle state or the inactive state, the method further includes:
the terminal transmits first feedback information, the first feedback information being used for indicating that the first indication information has been received.

That is, in a case that the first indication information includes indication information for indicating that the connected state is not entered to update the configuration information of the reference signal for positioning, the terminal may transmit first feedback information, or may directly transmit the first feedback information independent of the first indication information.

Optionally, the first indication information or the first feedback information is an LTE position protocol (LTE position protocol, LPP) message (the LPP message may be direct signaling between a location server and the UE), which may be carried in the NAS message and further carried in the RRC message (carried by SRB0 or SRB2).

In the embodiments of this application, optionally, the first feedback information is transmitted in the idle state or the inactive state or transmitted after the terminal enters the connected state (for example, entering the connected state after initiating an RRC connection establishment or resume process).

In the embodiments of this application, the first feedback information is transmitted in the idle state or the inactive state: in an SDT (for example, random access small data transmission (RA-SDT)) manner or by (pre-) configured uplink resources (for example, PUSCH or PUCCH) over the network. The SDT manner may also be referred to as an uplink SDT, and the SDT manner may include at least one of the following: SDT for a control plane, SDT for a user plane, RACH-based SDT, and Configure grant-based SDT.

In an implementation, the first feedback information is carried in an RRC resume request (resume request) message in the SDT manner.

Optionally, all the feedback methods in the SDT manner in the embodiments of this application may be consistent with the manner in which the LTE reports the information related to location.

Optionally,
the first indication information further includes at least one of the following:
whether to request the terminal to transmit the first feedback information;
instructing the terminal to transmit the first feedback information in the connected state or not to transmit the first feedback information in the connected state; and
resource configuration information of the first feedback information, such as a time frequency location.

In the embodiments of this application, optionally, the first feedback information includes at least one of the following:
a feedback reason (such as a reason for initiating SDT), the feedback reason including at least one of the following: a feedback indicated by availability of the reference signal for positioning, an update feedback of the configuration information of the reference signal for positioning, and an update feedback of the configuration information of the reference signal for positioning initiated by the network-side device, where in an implementation, optionally, the feedback reason is carried by a resume cause in the RRC resume request message; and
an update response to the configuration information of the reference signal for positioning, the update response being used for responding to indication information, in the first indication information, for indicating whether the configuration information of the reference signal for positioning is updated.

In the embodiments of this application, optionally, the first feedback information only carries the feedback reason and/or the configuration information update response of the reference signal for positioning. That is, the first feedback information does not carry other uplink data than the feedback reason and/or the configuration information update response of the reference signal for positioning.

In the embodiments of this application, optionally, after the terminal transmits first feedback information, the method further includes: the terminal receives updated configuration information of the reference signal for positioning.

In the embodiments of this application, optionally, the terminal receives the updated configuration information of the reference signal for positioning in one of the following manners:
the terminal obtains the updated configuration information of the reference signal for positioning in an RRC release message; and
the terminal obtains the updated configuration information of the reference signal for positioning in a PDSCH scheduled by a PDCCH scrambled by a C-RNTI. Optionally, the updated configuration information is obtained by the PDCCH scrambled by the C-RNTI and the PDSCH scheduled thereby after the first feedback information or a contention resolution success message and before the RRC release message.

The terminal receives the updated configuration information of the reference signal for positioning after entering the connected state.

In the embodiments of this application, optionally, receiving, by the terminal, the updated configuration information of the reference signal for positioning includes: receiving the updated configuration information of the reference signal for positioning before the first timer expires.

In the connected state, when a measurement gap (measurement gap) is not configured, the UE can only measure, within an active (active) downlink DL (Downlink) bandwidth part (Bandwidth Part, BWP), a PRS which is the same as the parameter configuration (numerology) of the active DL BWP. In the idle state or the inactive state, if the UE is configured with an initial (initial) DL BWP and the UE is expected to receive the reference signal for positioning, how the UE behaves to perform is a problem to be solved.

In the embodiments of this application, optionally, receiving and measuring the downlink reference signal for positioning includes:
in a case that the terminal is configured with an initial downlink BWP, the terminal performs one of the following:
1) Receive the downlink reference signal for positioning inside of the initial downlink BWP.

That is, the terminal is not expected to receive the downlink reference signal for positioning outside of the initial downlink BWP.

2) Receive a downlink reference signal for positioning with the same parameter configuration (numerology) as the initial downlink BWP inside of the initial downlink BWP. The parameter configuration includes at least one of the following: sub-carrier spacing (SCS) and cyclic prefix (CP) type.

That is, the terminal is not expected to receive the downlink reference signal for positioning different from the numerology inside of the initial downlink BWP.

3) In a case that the downlink reference signal for positioning and a first signal are repeated or collided or transmitted in the same symbol, the terminal skips receiving the downlink reference signal for positioning, the first signal including at least one of the following: SIB 1, other SIBs (Other SIB) than SIB1, Msg2, MSg4, MsgB, a PDCCH scheduling SIB1, and an SSB.

That is, the terminal is not expected to receive the downlink reference signal for positioning and the first signal in the same symbol. Or, in a case that the downlink reference signal for positioning and the first signal are repeated (or collided or transmitted) in the same symbol, the terminal is not required (not expected) to process the downlink reference signal for positioning.

4) The terminal receives the downlink reference signal for positioning outside of the initial downlink BWP (or not inside of the initial downlink BWP).

Optionally, in a case that the downlink reference signal for positioning is located outside of the initial downlink BWP, and/or the parameter configuration of the downlink reference signal for positioning is different from the initial downlink BWP, the terminal receives the downlink reference signal for positioning outside of the initial downlink BWP.

Optionally, receiving, by the terminal, the downlink reference signal for positioning outside of the initial downlink BWP includes: in a case that an enable (enable) indication transmitted by the network-side device is received, the terminal receives the downlink reference signal for positioning outside of the initial downlink BWP (or does not receive the downlink reference signal for positioning inside of the initial downlink BWP). For example: in a case that the enable indication is received, the terminal may not receive the downlink reference signal for positioning inside of the initial downlink BWP (or, receives the downlink reference signal for positioning outside of the initial downlink BWP). Otherwise, the terminal can receive the downlink reference signal for positioning inside of the initial downlink BWP (or the terminal cannot receive the downlink reference signal for positioning outside of the initial downlink BWP).

Optionally, the terminal is not expected to receive and transmit other signals or data during a period of time for receiving the downlink reference signal for positioning, except for at least one of the following signals: PRS, reference signals for RRM measurement, and signals for the random access process.

Optionally, the period of time for receiving the downlink reference signal for positioning may be a measurement gap in the idle state or the inactive state, which may be obtained by at least one of a network indication, a protocol agreement, and a terminal selection.

Optionally, receiving, by the terminal, the downlink reference signal for positioning outside of the initial downlink BWP includes: in a case that the downlink reference signal for positioning and the first signal are repeated or collided or transmitted in the same symbol, the terminal receives the downlink reference signal for positioning and the first signal at the same time. The downlink reference signal for positioning is outside of the initial downlink BWP, and the first signal is inside of the initial downlink BWP. The first signal includes at least one of the following: SIB 1, other SIBs (Other SIB) than SIB1, Msg2, MSg4, MsgB, a PDCCH scheduling SIB1, and an SSB. Optionally, the terminal receives the downlink reference signal for positioning and the first signal in the same symbol based on terminal capability, and the terminal needs to report the capability to the network device.

5) The terminal performs BWP handover according to an indication from the network-side device, a protocol agreement, or a selection of the terminal, and receives the downlink reference signal for positioning on the BWP after handover.

Optionally, in a case that the downlink reference signal for positioning is located outside of the initial downlink BWP, and/or the parameter configuration of the downlink reference signal for positioning is different from the initial downlink BWP, the terminal performs BWP handover, and receives the downlink reference signal for positioning on the BWP after handover, according to the indication from the network-side device, the protocol agreement, or the selection of the terminal.

At present, in the method based on random access small data transmission (RA-SDT), the UE is allowed to monitor the physical downlink control channel (Physical Downlink Control Channel, PDCCH) scrambled by the C-RNTI for a period of time between the successful contention resolution and the RRC release (release) message. In the embodiments of this application, when the UE reports positioning data, it is simultaneously indicated whether the positioning data has subsequent data transmission and the data size of the data, so that the network-side device can schedule the subsequent positioning data with the PDCCH scrambled by the C-RNTI.

Optionally, the C-RNTI in the present invention may also be replaced by another RNTI, including but not limited to an I-RNTI (RNTI in the inactive state), or a location-dedicated RNTI, and the like.

In the embodiments of this application, optionally, the information related to location includes: second indication information, the second indication information being used for indicating information about subsequent data transmission and used for assisting the network-side device to perform the subsequent positioning process, such as assisting the network-side device to confirm whether uplink data transmission needs to be scheduled subsequently.

The information about subsequent data transmission includes at least one of the following:
whether there is the subsequent data transmission;
a size of the subsequent data transmission;
a period of the subsequent data transmission;
whether an ACK feedback is required for the subsequent data transmission;
service characteristics of data to be transmitted subsequently; and
a type of the data to be transmitted subsequently, the type including at least one of the following: data related to positioning or data related to non-positioning (such as service data), control plane data or user plane data, and signaling radio bearer (SRB 1, SRB 1 or SRB0), non-access stratum (NAS) or data radio bearer (DRB) data.

Optionally, after reporting the information related to location, the method further includes: transmitting the data to be transmitted subsequently on a PUSCH scheduled by a PDCCH configured by a network-side device.

Optionally, the PDCCH configured by the network-side device is scrambled by the C-RNTI.

Optionally, the PDCCH configured by the network-side device and the PUSCH scheduled by the PDCCH configured by the network-side device are located after the report of the information related to location or the contention resolution message and before the RRC release message.

Optionally, the PDCCH configured by the network-side device carries a type indication of scheduled uplink data. Transmitting the data to be transmitted subsequently on the PUSCH scheduled by the PDCCH configured by the network-side device includes:
transmitting the data to be transmitted subsequently corresponding to a type indicated by the type indication on the PUSCH scheduled by the PDCCH configured by the network-side device.

### 2. Configuration update of reference signal for positioning initiated by terminal

In the embodiments of this application, optionally, the positioning method further includes: the terminal transmits third indication information, the third indication information being used for indicating that the configuration information of the reference signal for positioning needs to be updated, so as to inform the network-side device that the configuration information of the downlink reference signal for positioning and/or the uplink reference signal for positioning needs to be updated. The reference signal for positioning includes at least one of the uplink reference signal for positioning and the downlink reference signal for positioning.

Optionally, the configuration information includes at least one of the following: spatial beam information and path loss configuration information.

Optionally, the third indication information is transmitted in an SDT manner or transmitted after the terminal enters the connected state (for example, the terminal enters the connected state after initiating an RRC connection establishment or connection resume process).

Optionally, the third indication information further includes: a reason for transmitting the third indication information (such as a reason for initiating SDT), the reason including at least one of the following: the terminal initiates update of the configuration information of the reference signal for positioning, update of the configuration information of the reference signal for positioning, and the configuration information of the reference signal for positioning is unavailable.

Optionally, the reference signal for positioning indicated by the third indication information is one of the following granularities:
reference signals for positioning under one or more groups of the configuration information of the reference signal for positioning;
one or more reference signal for positioning resources;
one or more reference signal for positioning resource sets;
one or more reference signals for positioning under a TRP;
reference signals for positioning under one or more frequency layers; and
reference signals for positioning under all frequency layers.

Optionally, the third indication information further includes at least one of the following to assist the network-side device to maintain the configuration information of the downlink reference signal for positioning and/or the uplink reference signal for positioning in the idle state or the inactive state, such as the spatial beam information and/or the path loss configuration information:
an RRM measurement result of a serving cell;
an RRM measurement result of a neighboring cell;
a measurement result of a reference signal for positioning of the serving cell, including but not limited to at least one of CSI-RS, SSB, PRS, and TRS; and
a measurement result of a reference signal for positioning of the neighboring cell, including but not limited to at least one of CSI-RS, SSB, PRS, and TRS.

The RRM measurement result may be a measurement result in a cell level (cell level) and/or a measurement result in a beam level (beam level).

Optionally, the measurement result includes at least one of the following: a reference signal (SSB and/or CSI-RS) identifier, measurement results of N best beams higher than a threshold, indicators of N best beams higher than the threshold, a measurement result of an optimal beam, an indicator of an optimal beam, measurement results of N beams with the strongest reference signal received power (Reference Signal Received Power, RSRP) of first arrival path, indicators of N beams with the strongest RSRP of first arrival path, and N is defined by protocol, indicated by the network-side device or selected by the terminal.

Optionally, transmitting, by the terminal, the third indication information includes: transmitting, by the terminal, the third indication information in a case that at least one of the following conditions is satisfied:
1) Transmit the third indication information in a case that the terminal detects that adjustment of a tracking area exceeds a first tracking area threshold and the terminal does not enter a connected state.

The adjustment of the tracking area exceeds the first tracking area threshold, that is, the tracking area is changed.

Optionally, the tracking area may be adjusted in at least one of the following manners:
the terminal automatically adjusts the tracking area;
N-TA-offset change (n-TimingAdvanceOffset indication) comes from the indication from the network-side device, such as SIB1; and
TA command indication comes from the indication from the network-side device, such as Msg2 or MsgB or other information.

2) Transmit the third indication information in a case that the terminal detects that a difference between two consecutive first measurement values exceeds a first measurement threshold and the terminal does not enter the connected state, the first measurement value including at least one of the following: measurement information of an SSB, measurement information of paging or Msg2 or Msg4 or MsgB, and measurement information of the reference signal for positioning;

The first measurement value includes at least one of the following:
measurement information of the SSB, such as RSRP, reference signal received quality (Reference Signal Received Quality, RSRQ) and/or SSB timing (timing) measurement information;
Paging, Msg2, Msg4, or MsgB measurement information, such as RSRP and/or RSRQ; and
measurement information of the PRS, such as RSRP, RSRQ, and/or time difference of arrival (Time Difference of Arrival, TDOA).

The measurement information of the SSB may be cell-level or beam-level measurement information. The measurement information of the PRS may be TRP-level or PRS resource-level or PRS resource set-level measurement information.

3) Transmit the third indication information in a case that the terminal detects that a second timer (such as a Time Alignment Timer) expires and the terminal does not enter the connected state.

The third indication information is transmitted in a case that handover of the resident cell of the terminal is implemented.

5) Transmit the third indication information in a case that handover of the resident cell of the terminal is implemented and that the downlink reference signal for positioning is not receivable, the information related to location is not reportable or the uplink reference signal for positioning is not transmittable.

The reason that the downlink reference signal for positioning is not receivable, the information related to location is not reportable or the uplink reference signal for positioning is not transmittable includes one of the following:
collision with the paging, the random access message, the system message, the SSB, and the like, and the uplink reference signal for positioning (SRS), the downlink reference signal for positioning (PRS) or information related to location being dropped or ignored; and
configuration change of idle discontinuous reception (Idle Discontinuous Reception, IDRX), resulting in change of the behavior of the UE transmitting the uplink reference signal for positioning, measuring the downlink reference signal for positioning or reporting the information related to location.

6) Transmit the third indication information in a case that the terminal moves out of a pre-configured valid area of the configuration information of the reference signal for positioning.

Optionally, the pre-configured valid area of the configuration information of the reference signal for positioning is a certain cell, a certain cell list, or a certain or some areas covered by the SSB.

In some embodiments of this application, optionally, after the terminal transmits third indication information, the method further includes: the terminal receives first indication information in the idle state or the inactive state, the first indication information including at least one of the following:
availability information of a reference signal for positioning or availability information of configuration information of the reference signal for positioning; and
update information of configuration information of a reference signal for positioning,

The reference signal for positioning includes at least one of the following: the uplink reference signal for positioning and the downlink reference signal for positioning.

Optionally, after the terminal transmits third indication information, the method further includes:
the terminal starts a third timer and receives the first indication information before the third timer expires.

In the embodiments of this application, optionally, reporting the information related to location includes:
reporting measurement information, the measurement information including at least one of the following:
an RRM measurement result of a serving cell;
an RRM measurement result of a neighboring cell;
a measurement result of a reference signal for positioning of the serving cell; and
a measurement result of a reference signal for positioning of the neighboring cell.

The measurement information is reported to assist the network-side device to maintain the configuration information of the downlink reference signal for positioning and/or the uplink reference signal for positioning in the idle state or the inactive state. The configuration information includes but is not limited to: spatial beam information and/or path loss configuration information.

Optionally, the measurement information is reported in an SDT manner (for example, in a CG-based SDT manner) or reported after entering the connected state (for example, the UE initiates an RRC connection establishment or resume process and enters the connected state).

Optionally, the terminal reports the measurement information periodically.

Optionally, before the terminal reports the measurement information periodically, the method further includes:
the terminal receives a report configuration of the measurement information, the report configuration including but not limited to at least one of the following:
report period;
period offset;
number of periods;
contents of reported measurement results such as RSRP; and
cell identifier associated with execution of RRM measurement.

Optionally, receiving, by the terminal, the report configuration of the measurement information includes at least one of the following:
the terminal obtains the report configuration of the measurement information in a broadcast message;
the terminal obtains the report configuration of the measurement information in an RRC dedicated message; and
the terminal obtains the report configuration of the measurement information in an RRC release message.

Optionally, the uplink reference signal for positioning includes: an aperiodic SRS or a semi-persistent SRS.

As mentioned in the foregoing embodiments, in the method based on random access small data transmission (RA-SDT), the LTE is allowed to monitor the physical downlink control channel (Physical Downlink Control Channel, PDCCH) scrambled by the C-RNTI for a period of time between the successful contention resolution and the RRC release (release) message. In the embodiments of this application, the PDCCH scrambled by the C-RNTI may be used to trigger the transmission of the aperiodic SRS, so as to assist the network device to complete uplink positioning measurement.

Optionally, transmitting the aperiodic SRS includes at least one of the following:
transmitting the aperiodic SRS triggered by a PDCCH scrambled by a C-RNTI; and
transmitting the aperiodic SRS by the PDCCH scrambled by the C-RNTI and/or after contention resolution is successful and before an RRC release message.

This solution is suitable for event-triggered positioning, such as event occurrence. The UE is triggered to transmit an uplink positioning request and an aperiodic SRS trigger request to the network-side device. After receiving the request, the network-side device triggers the transmission of the aperiodic SRS in the period of time between the successful contention resolution and the RRC release signaling.

Optionally, transmitting the semi-persistent SRS includes at least one of the following:
transmitting, by activation, the semi-persistent SRS by the PDSCH (such as a media access control (Media Access Control, MAC) control element (Control Element, CE) carried by the PDSCH) scheduled by the network-side device, so as to assist the network-side device to complete uplink positioning measurement; and
receiving the semi-persistent SRS by the PDSCH scheduled by the network-side device and/or after contention resolution is successful and before the RRC release message.

Optionally, the PDSCH is scheduled by the PDCCH scrambled by the C-RNTI.

Optionally, the semi-persistent SRS takes effect after the contention resolution is successful and before the RRC release message.

Optionally, before transmitting the uplink reference signal for positioning, the method further includes: the terminal transmits request information in an SDT manner (such as an RA-SDT manner), the request information being used for requesting a network-side device to trigger the aperiodic SRS or activate the semi-persistent SRS, and the request information including at least one of the following:
an aperiodic SRS trigger request or a semi-persistent SRS activation request;
an uplink positioning request; and
event information.

The event information includes but is not limited to: an area event, an action event, and the like. The area event means that a LTE detects that the LTE has entered, been away from, or is located within a specified target area (for example, area cell list/RNA/TAC). The action event means that the UE detects that the UE has moved from the previous position by more than a predefined linear distance.

Optionally, the request information is carried by an RRC resume request message.

Optionally, the request message is carried by a resume cause in the RRC resume request message, such as a-SRS request and sp-SRS request.

Optionally, the request information further includes: indication information indicating whether feedback from the network-side device is needed. For example: when the request information includes the need for feedback from the network-side device, the UE will then receive the feedback from the network-side device. It is indicated that the network-side device may trigger the aperiodic SRS or the semi-persistent SRS, or the network-side device cannot trigger the aperiodic SRS or the semi-persistent SRS.

Optionally, transmitting the request information in the SDT manner includes: transmitting the request information in the SDT manner in a case that an event occurs, the event including but not limited to at least one of the following: an area event and an action event.

Optionally, after transmitting the request information in the SDT manner, the method further includes:
receiving second feedback information transmitted by the network-side device, the second feedback information including indication information indicating whether the network-side device triggers the aperiodic SRS or activates the semi-persistent SRS.

Optionally, the second feedback information is carried by the RRC release message, or by the PDCCH, or by the PDSCH. The PDCCH and PDSCH are received after the contention resolution is successful and before the RRC release signaling.

Optionally, the positioning method further includes: receiving configuration information of the aperiodic SRS or the semi-persistent SRS, the configuration information being carried in one of the following manners: system information, previous RRC release message, and previous RRC dedicated message.

In the embodiments of this application, optionally, the positioning method further includes: the terminal transmits fourth indication information, the fourth indication information being used for indicating timing change of the uplink reference signal for positioning (such as SRS timing change), so as to assist the network device to accurately measure the uplink reference signal for positioning and to perform accurate positioning.

Optionally, transmitting, by the terminal, the fourth indication information includes one of the following:
the terminal transmits the fourth indication information in an SDT manner (for example, in a CG-based SDT and/or RACH-based SDT manner).

The terminal transmits the fourth indication information after entering the connected state (for example, the UE enters the connected state after initiating an RRC connection establishment/resume process).

Optionally, the fourth indication information is carried by an RRC resume request message.

Optionally, the fourth indication information is carried by a resume cause in the RRC resume request message.

Optionally, the fourth indication information further includes:
an amount of the timing change of the uplink reference signal for positioning;
a cause of the timing change of the uplink reference signal for positioning, the cause including at least one of the following: handover of a resident cell or cell reselection of the terminal, automatic adjustment of timing of the uplink reference signal for positioning by the terminal, and receiving of a timing advance command from the resident cell by the terminal.

Optionally, transmitting, by the terminal, the fourth indication information includes:
transmitting the fourth indication information in a case that at least one of the following conditions is satisfied: handover of a resident cell or cell reselection of the terminal, automatic adjustment of timing of the uplink reference signal for positioning by the terminal, and receiving of a timing advance (Timing advance) command from the resident cell by the terminal.

Optionally, the cause of the timing change of the uplink reference signal for positioning is also event information that triggers the UE to indicate the timing change of the uplink reference signal for positioning.

In the embodiments of this application, optionally, the UE indicates the timing change of the uplink reference signal for positioning to the serving gNB (or resident gNB) and/or the location server. The timing change is then transmitted by the serving gNB (or resident gNB) and/or the location server to another GNB participating in the positioning.

Optionally, when the timing change exceeds a certain threshold, the UE indicates the timing change of the uplink reference signal for positioning to the network device. The threshold may be determined by at least one of the protocol agreement, the network indication/pre-configuration, and the terminal selection.

In general, the LTE in the idle state or the inactive state will wake up periodically and monitor a paging (paging) message. The period is referred to as an IDRX period. In order to save power, the UE may need to measure the downlink reference signal for positioning near the paging as much as possible, or transmit the uplink reference signal for positioning, or report the information related to location, so as to reduce the number of waking times of the UE and save power consumption. Then, it is necessary to define a relation between the UE measuring the downlink reference signal for positioning, transmitting the uplink reference signal for positioning, or reporting the information related to location and IDRX. In addition, the IDRX configuration may change with the handover of the resident cell. Therefore, it is necessary to report handover information of the resident cell to the network-side device to assist the network-side device to determine the UE measurement and transmission behaviors in a new resident cell. At the same time, the gNB in the positioning area needs to transmit the IDRX configuration to the location server, so as to assist the location server to confirm the subsequent behavior.

Based on the foregoing description, optionally, the positioning method further includes: the terminal transmits fifth indication information, the fifth indication information being used for indicating change of a resident cell, so as to assist the network-side device to perform a subsequent resource allocation or positioning process.

Optionally, the serving gNB (or the resident gNB) may obtain information on the change of the resident cell of the LTE, and the change information of the resident cell may also be transmitted by the serving gNB (or the resident gNB) to the location server.

Optionally, transmitting, by the terminal, the fifth indication information includes one of the following:
the terminal transmits the fifth indication information in an SDT manner (for example, in a CG-based SDT and/or RACH-based SDT manner).

The terminal transmits the fifth indication information after entering the connected state (for example, the UE enters the connected state after initiating an RRC connection establishment or resume process).

Optionally, the fifth indication information is carried by an RRC resume request message.

Optionally, the fifth indication information is carried by a resume cause in the RRC resume request message.

Optionally, the fifth indication information further includes identification information of the resident cell.

Optionally, transmitting, by the terminal, the fifth indication information includes: transmitting the fifth indication information in a case that handover of the resident cell of the terminal is implemented. That is, the event of the change of the resident cell of the UE triggers the LTE to transmit the fifth indication information.

Optionally, the positioning method further includes: initiating, by the terminal, a random access to enter a connected state or transmitting third indication information in a case that handover of the resident cell of the terminal is implemented and the terminal is incapable of performing at least one of the following behaviors:
transmitting an uplink reference signal for positioning;
measuring a downlink reference signal for positioning; and
reporting information related to location,
where the third indication information is used for indicating that configuration information of a reference signal for positioning needs to be updated, and the reference signal for positioning includes at least one of the uplink reference signal for positioning and the downlink reference signal for positioning.

Optionally, the foregoing cause may be carried when the terminal initiates the random access to enter the connected state or transmits the third indication information.

Optionally, the cause that the LTE cannot transmit the uplink reference signal for positioning and/or measure the downlink reference signal for positioning, and/or the LTE reports the information related to location is as follows:
collision with the paging, the random access message, the system message, the SSB, and the like, and SRS, PRS or positioning information being dropped or ignored; and
IDRX configuration change, resulting in change of the behavior of the UE transmitting the uplink reference signal for positioning, measuring the downlink reference signal for positioning or reporting the information related to location.

Optionally, the LTE indicates the change of the resident cell to the serving gNB (or resident gNB) and/or the location server. The change is then transmitted by the serving gNB (or resident gNB) and/or the location server to another GNB participating in the positioning.

In the embodiments of this application, optionally, performing, by the terminal, the positioning behavior in the idle state or the inactive state further includes at least one of the following:
in a case that a distance between a time domain location of an uplink reference signal for positioning to be transmitted and a paging occasion exceeds a distance X (or beyond the range of a time window X), the terminal ignores the uplink reference signal for positioning to be transmitted;
in a case that a distance between a time domain location of a downlink reference signal for positioning and the paging occasion exceeds the distance X, the terminal ignores measurement of the downlink reference signal for positioning;
in a case that a distance between a time domain location where information related to location is reported and the paging occasion exceeds the distance X, the terminal ignores reporting of the information related to location; and
in a case that a distance between the time domain location of the uplink reference signal for positioning to be transmitted and the time domain location of the downlink reference signal for positioning exceeds the distance X, the terminal ignores the uplink reference signal for positioning to be transmitted.

Optionally, X is determined by the indication from the network-side device, the protocol agreement, or the terminal selection.

Optionally, X may be in units of ms, s, and slots (slot).

Optionally, X is related to an IDRX period, such as half of the IDRX period.

Optionally, the paging occasion is a paging occasion in a resident cell.

The gNB in the RNA area (or the RAN tracking area or the positioning signal configuration valid area) may transmit IDRX configuration information to the location server in advance. The IDRX configuration information includes but is not limited to: IDRX period, paging occasion location, paging frame location, international mobile subscriber identity (International Mobile Subscriber Identity, IMSI) of the UE, and the like.

The gNB receives a request from the location server to request for the IDRX configuration information before transmitting the information.

The role of the location server to obtain the IDRX configuration information is as follows:
1) The location server is assisted to determine auxiliary information of positioning, such as PRS configuration, so that the PRS configuration is more matched with the IDRX configuration to save power consumption.
2) After handover of the resident cell by the LTE, the IDRX configuration is changed, resulting in change of the behavior of the UE transmitting the uplink reference signal for positioning, measuring the downlink reference signal for positioning or reporting the information related to location. If the network-side device determines the IDRX configuration in advance, once the network-side device determines the handover of the resident cell by the LTE, it may be predicted how the behavior of transmitting the uplink reference signal for positioning, measuring the downlink reference signal for positioning or reporting the information related to location by the UE is changed.

For example, if SRSs cannot be transmitted at some SRS occasions due to the handover of the resident cell, the location server may notify a neighboring gNB to release SRS resources in some locations, thereby reducing resource waste. Or, if SRSs may be transmitted at some SRS occasions due to the handover of the resident cell, the location server may notify the neighboring gNB to receive these SRS occasions at a particular location.

Further, in downlink and uplink positioning, when the UE transmits the uplink reference signal for positioning, a spatial beam relation (spatial relation) of the uplink reference signal for positioning is related to the downlink reference signal for positioning. That is, the UE may use a beam that receives the downlink reference signal for positioning of a certain TRP to transmit the uplink reference signal for positioning to the TRP.

Further, the LTE receives the configuration of the uplink reference signal for positioning before transmitting the uplink reference signal for positioning. At least one of the following configuration information may be recommended to the base station by the location server, and then configured to the UE by the base station: period, period offset, repeated configuration of the uplink reference signal for positioning, duration of one period of the uplink reference signal for positioning, and the like. Optionally, the period of the uplink reference signal for positioning may be configured to be an integer multiple of the period of the downlink reference signal for positioning. Optionally, the configuration information is used for matching with the downlink reference signal for positioning as much as possible, so as to reduce the number of waking times of the UE in downlink and uplink positioning and save the power consumption of the UE.

In the embodiments of this application, optionally, receiving and measuring the downlink reference signal for positioning includes: receiving and measuring the downlink reference signal for positioning according to a spatial beam relation between the downlink reference signal for positioning and a synchronization signal block SSB,
where the spatial beam relation between the downlink reference signal for positioning and the synchronization signal block SSB is obtained by a spatial quasi co-location (Quasi Co-Location, QCL) relation between the downlink reference signal for positioning and the SSB indicated by the network-side device; or, obtained by a default relation between a downlink reference signal for positioning resource and an SSB actually transmitted in synchronization signal block burst (SSB burst) under a TRP where the downlink reference signal for positioning resource is located.

The default relation is: Under this TRP, the PRS resource set includes N PRS resources, and the number of SSBs transmitted actually in the SSB burst is also N. Therefore, there is a one-to-one spatial relation between the PRS resources and the SSBs. For example, a PRS resource with a PRS resource ID 0 corresponds to an SSB with an SSB index 0, a PRS resource with a PRS resource ID 1 corresponds to an SSB with an SSB index 1, and so on. Definitely, this application does not make special restrictions on the PRS resource ID and the SSB index, which may also be in another corresponding relation.

Or, the default relation is that the PRS resource set includes N PRS resources, and the number of SSBs actually transmitted in the SSB burst is M, and M is an integer multiple of N (or M>=N). Then N PRS resources may have a one-to-one spatial relation with N SSBs in M SSBs. The N SSBs may be continuous or discontinuous, and which N SSBs in M may be determined by protocol agreement or network indication.

The spatial QCL relation between the downlink reference signal for positioning and a certain SSB may represent that the downlink reference signal for positioning and the SSB are transmitted from the same transmitting beam.

Optionally, an SSB default relation actually transmitted in a downlink reference signal for positioning resource and a synchronization signal block burst (SSB burst) under a TRP where the downlink reference signal for positioning resource is located may be used for broadcast positioning auxiliary data.

In the embodiments of this application, the configuration, activation, and/or update in the downlink and uplink positioning in the idle state or the active state are solved, so that the downlink and uplink positioning in the idle state or the active state can be performed more effectively.

The embodiments of this application further provide a positioning method, including:
a terminal performs a positioning behavior in an idle state, an inactive state, or a connected state, where performing the positioning behavior includes:
reporting information related to location, the information related to location including an association relation between a positioning measurement result and a timing error group, and/or, an association relation between an uplink reference signal for positioning and the timing error group.

The association relation is used for assisting the network-side device to perform positioning calculation, thereby reducing or eliminating the influence of the timing error group on positioning accuracy and improving the positioning accuracy.

The association relation between the positioning measurement result and the timing error group (Timing Error Group, TEG) includes one of the following: an association relation between the positioning measurement result and LTE Rx TEG, an association relation between the positioning measurement result and UE RxTx TEG, and an association relation between the positioning measurement result and {Rx TEG, Tx TEG}.

The association relation between the uplink reference signal for positioning and the timing error group includes one of the following:
an association relation between the uplink reference signal for positioning and UE Tx TEG, an association relation between the uplink reference signal for positioning and UE RxTx TEG,
and an association relation between the uplink reference signal for positioning and {Rx TEG, Tx TEG}.

The measurement result and/or the uplink reference signal for positioning located in the same timing error group have the same receiving timing error and/or transmitting timing error.

The association relation may be represented by the associated TEG ID, or by grouping the downlink reference signal for positioning measurement results and/or uplink reference signals for positioning of the same TEG, or in other manners.

Optionally, the association relation, indicated by the UE, between the uplink reference signal for positioning and the timing error group further includes: the LTE may also indicate the change of the TEG associated with the uplink reference signal for positioning (such as the SRS) to the network device. Optionally, taking the SRS as an example, the change of the TEG may be that the TEG associated with a certain SRS instance changes compared with the TEG associated with a previous SRS instance during SRS transmission, or that the TEG associated with Tx timing (or SRS) in DL+UI, positioning measurement results (such as Rx-Tx time difference) changes.

In the embodiments of this application, optionally, the association relation between the uplink reference signal for positioning and the timing error group is contained in the positioning measurement result in a downlink and uplink positioning method (DL+LTI, positioning method).

The downlink and uplink positioning method (DL+UI, positioning method) includes but is not limited to ECID, a multi round-trip time (multi Round-Trip Time, multi-RTT) positioning method, and the like.

In the downlink and uplink positioning method (DL+UI, positioning method), the user may indicate the association relation between the positioning measurement result and UE Rx TEG, and/or the association relation between the uplink reference signal for positioning and UE Tx TEG. In addition, since downlink measurement and uplink transmission are included in the downlink and uplink positioning method, the timing error may be the sum of a downlink measurement error and an uplink transmission error.

Optionally, the UE may further indicate an association relation between a combination of Rx TEG and Tx TEG (namely, a combination of positioning measurement results and SRS transmission) and an overall timing error group (for example, with RxTx TEG) or an association relation between overall timing errors. For example, the UE indicates a relation between the positioning measurement result and two Rx TEGs (Rx TEG0, Rx TEG1), and a relation between the uplink reference signal for positioning and two Tx TEGs (Tx TEG0, Tx TEG1). The UE may further indicate an association relation between overall TEGs after a combination of two groups of Rx TEGs and two groups of Tx TEGs or an association relation between overall timing errors. Different overall timing error groups have different overall timing error values. For example, it is indicated that overall errors of Rx TEG0+Tx TEG0 and Rx TEG1+Tx TEG0 are the same (or the overall errors are less than a certain threshold), or are located in the same overall timing error group 0. It is indicated that Rx TEG0+Tx TEG1 is in an overall timing error group 1. It is indicated that Rx TEG1+Tx TEG2 is in an overall timing error group 2. The error values of the overall timing error groups 0, 1, and 2 are different (or it cannot be assumed that the errors of the overall timing error groups 0, 1, and 2 are all less than a certain threshold).

Optionally, in the downlink and uplink positioning method, the UE may indicate an association relation between a measurement result (such as Rx-Tx time difference) and RxTx TEG. An implementation is as follows:
In an RxTx TEG, the UE may indicate at least one group of {PRS resources, SRS resources} (a combination of PRS resources and SRS resources, or a combination of downlink reference signal for positioning resources and uplink reference signal for positioning resources). The at least one group is located in the same RxTx TEG or shares the same RxTx TEG ID. PRS resources and SRS resources between different groups are not located in the same RxTx TEG (namely, PRS resources of group A and SRS resources of group B are not located in the same RxTx TEG). PRS resources are used for determining Rx time in Rx-Tx time difference measurement. SRS resources are used for determining Tx time in Rx-Tx time difference measurement.

Optionally, when the TEG associated with SRS resource(s) A (such as Tx TEG or RxTx TEG) is changed, the LTE may indicate the change (for example, from RxTx TEG 0 to RxTx TEG1) of RxTx TEG associated with SRS resource(s) A and all PRS resources (namely, one or more {PRS resources, SRS resource(s) A} combinations) in one or more groups {PRS resources, SRS resources} including SRS resource(s) A. SRS resource(s) A is one or more SRS resources with changing TEG.

Optionally, when the TEG associated with PRS resource(s) A (such as Rx TEG or RxTx TEG) is changed, the LTE may indicate the change (for example, from RxTx TEG 0 to RxTx TEG2) of RxTx TEG associated with PRS resource(s) A and all SRS resources (namely, one or more {PRS resource(s) A, SRS resources} combinations) in one or more groups {PRS resources, SRS resources} including PRS resource(s) A.

Optionally, the LTE reports the association relation between the positioning measurement result and the timing error group in at least one of the following manners:
(1) The LTE reports an association relation between measurement results of multiple downlink reference signal for positioning resources (PRS resource) under a certain TRP and timing error groups (such as UE Rx TEG). In the reported association relation, each timing error group is associated with a measurement result of at least one reference signal for positioning resource. When a first preset condition is satisfied, the UE must report the measurement result of at least one reference signal for positioning resource associated with a target timing error group and the association relation. The target timing error group is any one of multiple timing error groups supported by the UE.

The first preset condition includes, but is not limited to, one of the following:
the quality of the measurement result of the downlink reference signal for positioning resource associated with the target timing error group exceeds a certain threshold. For example: an RSRP value of a first path exceeds a certain threshold.

The measurement result of the downlink reference signal for positioning resource associated with the target timing error group is a measurement result of a line of sight (Line of Sight, LOS), or a LOS probability of the measurement result of the downlink reference signal for positioning resource associated with the target timing error group is higher than a certain threshold.

The corresponding channel distributions of the downlink reference signal for positioning resources associated with the multiple timing error groups are similar, and the multiple timing error groups are the target timing error groups. The similarity of channel distributions is, for example, the similarity of power delay spectrum distributions (for example, relative locations of multiple paths in a power delay spectrum are similar or consistent).

The LTE behavior may be determined by at least one of network indication, protocol agreement, and UE selection. For example, the network sets an 'enable (enable)' switch. When the 'enable (enable)' switch indicates 'on' (or present, or binary '1', or the like), the UE needs to follow the LTE behavior. Otherwise, the LTE does not need to follow the LTE behavior.

Optionally, in another implementation, when the first preset condition is satisfied, the LTE may report the measurement result of at least one reference signal for positioning resource associated with a target timing error group and the association relation, and/or report differences of timing errors of multiple target timing error groups, and/or compensate the differences of the timing errors of the multiple target timing error groups in the reported measurement result. The LTE behavior may be determined by at least one of network indication, protocol agreement, and LTE selection.

Optionally, the UE may report the measurement result of at least one reference signal for positioning resource associated with a target timing error group and the association relation, and/or report differences of timing errors of multiple target timing error groups, and/or compensate the differences of the timing errors of the multiple target timing error groups in the reported measurement result. The LTE behavior may be determined by at least one of network indication, protocol agreement, and UE selection.

(2) The UE reports an association relation between measurement results of a target downlink reference signal for positioning resource (PRS resource) under a certain TRP and multiple timing error groups (such as LTE Rx TEG). In a case that the second preset condition is satisfied, the terminal reports an association relation between the target positioning measurement result and the multiple TEGs.

The second preset condition includes, but is not limited to, one of the following:
The quality of downlink positioning measurement results associated with the multiple TEGs exceeds a certain threshold. For example: an RSRP value of a first path exceeds a certain threshold.

The downlink positioning measurement results associated with the multiple TEGs are measurement results of a line of sight (LOS), or a LOS probability of the downlink positioning measurement results is higher than a certain threshold.

When the terminal scans a receiving beam, different receiving beams are associated with different TEGs, and the quality of the downlink positioning measurement results corresponding to the multiple receiving beams exceeds a certain threshold.

The corresponding channel distributions of the multiple TEGs associated with the target reference signal for positioning resources are similar. The similarity of channel distributions is, for example, the similarity of power delay spectrum distributions (for example, relative locations of multiple paths in a power delay spectrum are similar or consistent).

The UE behavior may be determined by at least one of network indication, protocol agreement, and UE selection. For example, the network sets an 'enable (enable)' switch. When the 'enable (enable)' switch indicates 'on' (or present, or binary '1', or the like), the UE needs to follow the LTE behavior. Otherwise, the LTE does not need to follow the LTE behavior.

Optionally, when the first and/or second preset conditions are met, the UE may report an association relation between the measurement results of the multiple reference signal for positioning resources and different timing error groups, and/or report an association relation between the measurement results of the reference signal for positioning resources and different timing error groups, and/or report differences of timing errors of multiple target timing error groups, and/or compensate the differences of the timing errors of the multiple target timing error groups in the reported measurement result. The UE behavior may be determined by at least one of network indication, protocol agreement, and LTE selection.

Optionally, the UE may report the association relation between the measurement results of multiple reference signal for positioning resources and different timing error groups, and/or report the association relation between the measurement results of the reference signal for positioning resources and different timing error groups, and/or report differences of timing errors of multiple timing error groups, and/or compensate the differences of the timing errors of the multiple target timing error groups in the reported measurement result. The LTE behavior may be determined by at least one of network indication, protocol agreement, and LTE selection.

In addition, in the solution of the present invention, when the network device is a base station, the base station (such as the gNB) needs to report the uplink positioning measurement result to the location server (such as the LMF) after measuring the uplink reference signal for positioning. Reporting, by the base station (such as the gNB), the uplink positioning measurement result further includes:
the gNB reports the association relation between the uplink positioning measurement result and the timing error group, including: the LTE reports an association relation between measurement results of multiple uplink reference signal for positioning resources (SRS resource) of a certain UE and timing error groups (such as UE Tx TEG). In the reported association relation, each timing error group (such as UE Tx TEG) is associated with a measurement result of at least one uplink reference signal for positioning resource. When a third preset condition is satisfied, the gNB must report the measurement result of at least one uplink reference signal for positioning resource associated with a target timing error group and the association relation. The target timing error group is any one of multiple timing error groups (such as UE Tx TEG) supported by the UE.

The third preset condition includes, but is not limited to, one of the following:
the quality of the measurement result of the uplink reference signal for positioning resource associated with the target timing error group exceeds a certain threshold. For example: an RSRP value of a first path exceeds a certain threshold.

The measurement result of the uplink reference signal for positioning resource associated with the target timing error group is a measurement result of a line of sight LOS, or a LOS probability of the measurement result of the downlink reference signal for positioning resource associated with the target timing error group is higher than a certain threshold.

The corresponding channel distributions of the uplink reference signal for positioning resources associated with the multiple timing error groups are similar, and the multiple timing error groups are the target timing error groups. The similarity of channel distributions is, for example, the similarity of power delay spectrum distributions (for example, relative locations of multiple paths in a power delay spectrum are similar or consistent).

The gNB behavior may be determined by at least one of network (such as LMF) indication, protocol agreement, and gNB implementation. For example, the network (LMF) sets an 'enable (enable)' switch. When the 'enable (enable)' switch indicates 'on' (or present, or binary' 1', or the like), the gNB needs to follow the behavior. Otherwise, the gNB does not need to follow the LTE behavior.

Optionally, in another implementation, when the third preset condition is satisfied, the gNB may report the measurement result of at least one uplink reference signal for positioning resource associated with a target timing error group and the association relation, and/or report differences of timing errors of multiple target timing error groups, and/or compensate the differences of the timing errors of the multiple target timing error groups in the reported measurement result. The gNB behavior may be determined by at least one of network indication, protocol agreement, and UE selection.

Optionally, the gNB may report the measurement result of at least one uplink reference signal for positioning resource associated with a target timing error group and the association relation, and/or report differences of timing errors of multiple target timing error groups, and/or compensate the differences of the timing errors of the multiple target timing error groups in the reported measurement result. The gNB behavior may be determined by at least one of network indication, protocol agreement, and LTE selection.

The first/second/third preset conditions may be determined by at least one of network indication, protocol agreement, and UE/base station selection.

The positioning method of this application will be described below in connection with specific embodiments.

### Embodiment 1 of this application:

This embodiment provides a process of initiating, by a network-side device, reference signal for positioning configuration update, including the following steps:
Step 1: In on-demand PRS configuration, an LMF needs to update on-demand PRS configuration information to multiple UEs, including a UE in a connected state and multiple UEs in an idle state or an inactive state.
Step 2: The LMF transmits On-demand request information to an AMF, and the AMF transmits the On-demand request information to a certain gNB.
Step 3: The gNB determines whether a size of the request information exceeds a threshold. If the size does not exceed the threshold, the process skips to step 4. If the size exceeds the threshold, a process of the UE entering the connected state is initiated.
Step 4: The gNB transmits a paging message, carrying configuration update of a reference signal for positioning. The paging may be RAN-paging or SA-paging (core network paging).
Step 5: The UE receives configuration update indication of the reference signal for positioning, including: indication of updating the reference signal for positioning and no need to enter the connected state.
Step 6: The UE needs to give a feedback that the configuration update of the reference signal for positioning is received in an uplink SDT manner. The uplink SDT is carried in an RRCresumerequest message, and resumecause in RRCresumerequest carries 'configuration update feedback of reference signal for positioning', indicating that the uplink SDT process is initiated for the configuration update feedback of the reference signal for positioning.
Step 7: The gNB receives the feedback from the SDT of the UE and transmits the updated reference signal for positioning configuration to the UE through an RRC release message.

### Embodiment 2 of this application:

This embodiment provides an implementation of aperiodic SRS transmission.

Manner 1: A LTE transmits a request to a gNB.

Step 1: The UE monitors the occurrence of an event, such as an action event or an area event, and the event triggers the LTE to initiate a request transmitted by an aperiodic SRS.

Step 2: The UE transmits an aperiodic SRS request to the gNB by RA-SDT, and the request carries a cause: such as event information and/or uplink positioning request and/or aperiodic SRS transmitting request.

Step 3: The gNB receives the request from the LTE, and if the aperiodic SRS may be triggered, the aperiodic SRS trigger process is initiated. Otherwise, the process skips to step 4.

3.1 The gNB transmits a PDCCH to the LTE for triggering the aperiodic SRS.

3.2 The gNB transmits aperiodic SRS-related information (such as aperiodic SRS transmitting time) to a location server (via NRPPa), and then the location server transmits the aperiodic SRS-related information to another gNB participating in positioning. Or, the gNB transmits the aperiodic SRS-related information to another gNB interface participating in the positioning (for example, via Xn).

Step 4: The gNB transmits a response to the UE, including information that the aperiodic SRS cannot be triggered. The response may be carried by an RRC release message.

Manner 2: A UE transmits a request to a location server LMF.

Step 1: The UE monitors the occurrence of an event, such as an action event or an area event, and the event triggers the LTE to initiate a request transmitted by an aperiodic SRS.

Step 2: The UE transmits an aperiodic SRS request to the location server LMF by RA-SDT, and the request carries a cause: such as event information and/or uplink positioning request and/or aperiodic SRS transmitting request.

Step 3: The LMF receives the request from the UE and transmits the request to a gNB through NRPPa.

Step 4: If the gNB may trigger the aperiodic SRS, the aperiodic SRS trigger process is initiated. Otherwise, the process skips to 5 or 6.

4.1 The gNB transmits a PDCCH to the LTE for triggering the aperiodic SRS.

4.2 The gNB transmits aperiodic SRS-related information (such as aperiodic SRS transmitting time) to a location server (via NRPPa), and then the location server transmits the aperiodic SRS-related information to another gNB participating in positioning. Or, the gNB transmits the aperiodic SRS-related information to another gNB interface participating in the positioning (for example, via Xn).

Step 5: The gNB transmits a response to the location server, including information that the aperiodic SRS cannot be triggered. The response may be carried by an NRPPa message.

5.1 The location serve transmits the response to the UE. This message may be an LPP message carried by an RRC release message.

Step 6: The gNB transmits a response to the UE, including information that the aperiodic SRS cannot be triggered. The response may be carried by an RRC release message.

Referring to FIG. 7, the embodiments of this application further provide a positioning method, including:
Step 71: A network-side device performs a positioning behavior, where performing the positioning behavior includes at least one of the following:
transmitting a downlink reference signal for positioning to a terminal in an idle state or an inactive state;
receiving information related to location reported by the terminal in the idle state or the inactive state; and
measuring an uplink reference signal for positioning transmitted by the terminal in the idle state or the inactive state.

Optionally, the network-side device may be a base station or a location server.

Optionally, when the network device is the base station, the downlink reference signal for positioning may be transmitted to the terminal, and/or the uplink reference signal for positioning may be received, and/or the information related to location reported by the terminal may be received. Optionally, the base station may further transmit the information related to location reported by the terminal to the location server (for example: the information related to location is transmitted through the base station and finally reaches the location server). Optionally, after receiving or measuring the uplink reference signal for positioning, the base station may also transmit the measurement result of the uplink reference signal for positioning to the location server. Here, the base station may be one of a serving base station (or a serving cell base station), a neighboring base station (or a neighboring cell base station), and a resident cell base station.

Optionally, when the network device is the location server, the network device may receive the information related to location reported by the terminal and/or the measurement result of the uplink reference signal for positioning measured by the base station.

Optionally, the method further includes:
the network-side device transmits first indication information to the terminal in the idle state or the inactive state, the first indication information including at least one of the following:
availability information of a reference signal for positioning or availability information of configuration information of the reference signal for positioning; and
update information of configuration information of a reference signal for positioning,
where the reference signal for positioning includes at least one of the following: the uplink reference signal for positioning and the downlink reference signal for positioning.

Optionally, the update information of the configuration information of the reference signal for positioning includes at least one of the following:
indication information for indicating whether the configuration information of the reference signal for positioning is updated; and
updated configuration information of the reference signal for positioning.

Optionally, the indication information for indicating whether the configuration information of the reference signal for positioning is updated or the updated configuration information of the reference signal for positioning includes at least one of the following:
on or off of the configuration information of the reference signal for positioning;
increase or decrease of a bandwidth of the reference signal for positioning;
increase or decrease of a period of the reference signal for positioning;
change of muting configuration of the reference signal for positioning;
change of spatial relation configuration of the reference signal for positioning; and
change of path loss configuration of the reference signal for positioning.

Optionally, the reference signal for positioning indicated by the first indication information is one of the following granularities:
reference signals for positioning corresponding to one or more groups of the configuration information of the reference signal for positioning;
one or more reference signal for positioning resources;
one or more reference signal for positioning resource sets;
one or more reference signals for positioning under a TRP;
reference signals for positioning under one or more frequency layers; and
reference signals for positioning under all frequency layers.

Optionally, the first indication information is carried in at least one of the following manners:
carrying in a paging PDCCH;
carrying in a paging PDSCH scheduled by the paging PDCCH;
carrying in a paging early indication;
carrying during a random access process or a small data transmission process;
carrying in a broadcast message; and
carrying in an RRC release message;
carrying in a PDCCH and/or a PDSCH according to a downlink monitoring occasion and/or a monitoring window configured by a network-side device; and
carrying from a downlink scheduling resource PDSCH configured by the network-side device.

Optionally, the first indication information is represented by bits of a short message in the paging PDCCH or by reserved bits in the paging PDCCH.

Optionally, indication information for indicating whether the configuration information of the reference signal for positioning is updated is carried in the paging PDCCH, and updated configuration information of the reference signal for positioning is carried in the paging PDSCH scheduled by the paging PDCCH.

Optionally, the first indication information further includes indication information for indicating whether to enter a connected state and to update the configuration information of the reference signal for positioning.

Optionally, after the network-side device transmits first indication information to the terminal in the idle state or the inactive state, the method further includes:
the network-side device receives first feedback information transmitted by the terminal, the first feedback information being used for indicating that the first indication information has been received.

Optionally, the first feedback information includes at least one of the following:
a feedback reason, the feedback reason including at least one of the following: a feedback indicated by availability of the reference signal for positioning, an update feedback of the configuration information of the reference signal for positioning, and an update feedback of the configuration information of the reference signal for positioning initiated by the network-side device; and
an update response to the configuration information of the reference signal for positioning, the update response being used for responding to indication information, in the first indication information, for indicating whether the configuration information of the reference signal for positioning is updated.

Optionally, after the network-side device receives first feedback information transmitted by the terminal, the method further includes:
the network-side device transmits updated configuration information of the reference signal for positioning to the terminal.

Optionally, the updated configuration information of the reference signal for positioning is carried in one of the following manners:
carrying in an RRC release message;
carrying in a PDSCH scheduled by a PDCCH scrambled by a C-RNTI; and
carrying in an RRC dedicated message.

Optionally, the information related to location includes: second indication information, the second indication information being used for indicating information about subsequent data transmission, and the information about the subsequent data transmission including at least one of the following:
whether there is the subsequent data transmission;
a size of the subsequent data transmission;
a period of the subsequent data transmission;
whether an acknowledgement (Acknowledgement, ACK) feedback is required for the subsequent data transmission;
service characteristics of data to be transmitted subsequently; and
a type of the data to be transmitted subsequently, the type including at least one of the following: data related to positioning or data related to non-positioning, control plane data or user plane data, and data in signaling radio bearer, in non-access stratum or in data radio bearer.

Optionally, the method further includes:
the network-side device receives the data to be transmitted subsequently on a PUSCH scheduled by a PDCCH configured by the network-side device.

Optionally, the method further includes:
the network-side device receives third indication information transmitted by the terminal, the third indication information being used for indicating that configuration information of a reference signal for positioning needs to be updated, and the reference signal for positioning including at least one of an uplink reference signal for positioning and a downlink reference signal for positioning.

Optionally, the third indication information further includes: a reason for transmitting the third indication information, the reason including at least one of the following: the terminal initiates update of the configuration information of the reference signal for positioning, update of the configuration information of the reference signal for positioning, and the configuration information of the reference signal for positioning is unavailable.

Optionally, the reference signal for positioning indicated by the third indication information is one of the following granularities:
reference signals for positioning under one or more groups of the configuration information of the reference signal for positioning;
one or more reference signal for positioning resources;
one or more reference signal for positioning resource sets;
one or more reference signals for positioning under a TRP;
reference signals for positioning under one or more frequency layers; and
reference signals for positioning under all frequency layer.

Optionally, the third indication information further includes at least one of the following:
an RRM measurement result of a serving cell;
an RRM measurement result of a neighboring cell;
a measurement result of a reference signal for positioning of the serving cell; and
a measurement result of a reference signal for positioning of the neighboring cell.

Optionally, the measurement result includes at least one of the following: a reference signal identifier, measurement results of N best beams higher than a threshold, indicators of N best beams higher than the threshold, a measurement result of an optimal beam, an indicator of an optimal beam, measurement results of N beams with the strongest RSRP of first arrival path, indicators of N beams with the strongest RSRP of first arrival path, and N is defined by protocol, indicated by the network-side device or selected by the terminal.

Optionally, after the network-side device receives third indication information transmitted by the terminal, the method further includes:
transmitting first indication information to the terminal, the first indication information including at least one of the following:
availability information of a reference signal for positioning or availability information of configuration information of the reference signal for positioning; and
update information of configuration information of a reference signal for positioning,
where the reference signal for positioning includes at least one of the following: the uplink reference signal for positioning and the downlink reference signal for positioning.

Optionally, the information related to location includes: measurement information, the measurement information including at least one of the following:
an RRM measurement result of a serving cell;
an RRM measurement result of a neighboring cell;
a measurement result of a reference signal for positioning of the serving cell; and
a measurement result of a reference signal for positioning of the neighboring cell.

Optionally, the measurement information is reported periodically by the terminal.

Optionally, the method further includes:
the network-side device transmits a report configuration of the measurement information to the terminal, the report configuration including at least one of the following:
report period;
period offset;
number of periods;
contents of reported measurement results; and
cell identifier associated with execution of RRM measurement.

Optionally, the report configuration of the measurement information is carried in at least one of the following manners:
carrying in a broadcast message; and
carrying in an RRC dedicated message; and
carrying in an RRC release message.

Optionally, the uplink reference signal for positioning includes: an aperiodic SRS or a semi-persistent SRS.

Optionally, before receiving the aperiodic SRS, the method further includes:
transmitting trigger information to the terminal through the PDCCH scrambled by the C-RNTI, so as to trigger the terminal to transmit the aperiodic SRS,
where the aperiodic SRS is transmitted by the PDCCH scrambled by the C-RNTI and/or after contention resolution is successful and before the RRC release message.

Optionally, before receiving the semi-persistent SRS, the method further includes:
transmitting activation information by the PDSCH scheduled by the network-side device, so as to activate the terminal to transmit the semi-persistent SRS,
where the semi-persistent SRS is received by the PDSCH scheduled by the network-side device and/or after contention resolution is successful and before the RRC release message.

Optionally, the method further includes:
the network-side device receives request information transmitted by the terminal in an SDT manner, the request information being used for requesting a network-side device to trigger the aperiodic SRS or activate the semi-persistent SRS, and the request information including at least one of the following:
an aperiodic SRS trigger request or a semi-persistent SRS activation request;
an uplink positioning request; and
event information.

Optionally, the method further includes:
the network-side device receives fourth indication information transmitted by the terminal, the fourth indication information being used for indicating timing change of the uplink reference signal for positioning.

Optionally, the fourth indication information further includes:
an amount of the timing change of the uplink reference signal for positioning;
a cause of the timing change of the uplink reference signal for positioning, the cause including at least one of the following: handover of a resident cell or cell reselection of the terminal, automatic adjustment of timing of the uplink reference signal for positioning by the terminal, and receiving of a timing advance command from the resident cell by the terminal.

Optionally, the method further includes:
the network-side device receives fifth indication information transmitted by the terminal, the fifth indication information being used for indicating change of a resident cell.

Optionally, the fifth indication information further includes identification information of the resident cell.

Optionally, receiving the information related to location reported by the terminal in the idle state or the inactive state includes:
receiving an association relation, reported by the terminal in the idle state or the inactive state, between a positioning measurement result and a timing error group, and/or, an association relation between an uplink reference signal for positioning and the timing error group.

Optionally, the association relation between the uplink reference signal for positioning and the timing error group is contained in the positioning measurement result in a downlink and uplink positioning method.

It is to be noted that the executive entity of the positioning method provided by the embodiments of this application may be a positioning apparatus or a control module in the positioning apparatus for performing the positioning method. In the embodiments of this application, the positioning apparatus provided by the embodiments of this application is described by performing the positioning method.

The embodiments of this application further provide a positioning method, including:
performing a positioning behavior, where performing the positioning behavior includes:
receiving information related to location reported by a terminal in an idle state or an inactive state, the information related to location including an association relation between a positioning measurement result and a timing error group, and/or, an association relation between an uplink reference signal for positioning and the timing error group.

The association relation is used for assisting the network-side device to perform positioning calculation, thereby reducing or eliminating the influence of the timing error group on positioning accuracy and improving the positioning accuracy.

Optionally, the association relation between the uplink reference signal for positioning and the timing error group is contained in the positioning measurement result in a downlink and uplink positioning method.

Referring to FIG. 8, the embodiments of this application further provide a positioning apparatus 80, including:
a positioning module 81, configured to perform a positioning behavior in an idle state or an inactive state, where performing the positioning behavior includes at least one of the following:
receiving and measuring a downlink reference signal for positioning; reporting information related to location; and
transmitting an uplink reference signal for positioning.

Optionally, the positioning apparatus 80 further includes:
a first receiving module, configured to receive first indication information in the idle state or the inactive state, the first indication information including at least one of the following:
availability information of a reference signal for positioning or availability information of configuration information of the reference signal for positioning; and
update information of configuration information of a reference signal for positioning,
where the reference signal for positioning includes at least one of the following: the uplink reference signal for positioning and the downlink reference signal for positioning.

Optionally, the positioning apparatus 80 further includes:
a first execution module, configured to assume, in a case that the first indication information indicates that the reference signal for positioning is unavailable, that the reference signal for positioning is not present, or that the reference signal for positioning is not transmitted, or that the reference signal for positioning is stopped from being transmitted, or that the terminal does not transmit the reference signal for positioning, or that the terminal stops transmitting the reference signal for positioning;
   or
a second execution module, configured to assume, in a case that the first indication information indicates that the configuration information of the reference signal for positioning is unavailable, that the reference signal for positioning corresponding to the configuration information of the reference signal for positioning is not present, or that the reference signal for positioning corresponding to the configuration information of the reference signal for positioning is not transmitted, or that the reference signal for positioning corresponding to the configuration information of the reference signal for positioning is stopped from being transmitted, or that the terminal does not transmit the reference signal for positioning corresponding to the configuration information of the reference signal for positioning, or that the terminal stops transmitting the reference signal for positioning corresponding to the configuration information of the reference signal for positioning.

Optionally, the update information of the configuration information of the reference signal for positioning includes at least one of the following:
indication information for indicating whether the configuration information of the reference signal for positioning is updated; and
updated configuration information of the reference signal for positioning.

Optionally, the indication information for indicating whether the configuration information of the reference signal for positioning is updated or the updated configuration information of the reference signal for positioning includes at least one of the following:
on or off of the configuration information of the reference signal for positioning;
increase or decrease of a bandwidth of the reference signal for positioning;
increase or decrease of a period of the reference signal for positioning;
change of muting configuration of the reference signal for positioning;
change of spatial relation configuration of the reference signal for positioning; and
change of path loss configuration of the reference signal for positioning.

Optionally, the reference signal for positioning indicated by the first indication information is one of the following granularities:
reference signals for positioning corresponding to one or more groups of the configuration information of the reference signal for positioning;
one or more reference signal for positioning resources;
one or more reference signal for positioning resource sets;
one or more reference signals for positioning under a TRP;
reference signals for positioning under one or more frequency layers; and
reference signals for positioning under all frequency layers.

Optionally, the receiving first indication information in the idle state or the inactive state includes at least one of the following:
obtaining the first indication information in a paging PDCCH;
obtaining the first indication information in a paging PDSCH scheduled by the paging PDCCH;
obtaining the first indication information in a paging early indication;
obtaining the first indication information during a random access process or a small data transmission process;
obtaining the first indication information in a broadcast message;
obtaining the first indication information in an RRC release message;
obtaining the first indication information in a PDCCH and/or a PDSCH according to a downlink monitoring occasion and/or a monitoring window configured by a network-side device; and
obtaining the first indication information from a downlink scheduling resource PDSCH configured by the network-side device.

Optionally, the first indication information is represented by bits of a short message in the paging PDCCH or by reserved bits in the paging PDCCH.

Optionally, indication information for indicating whether the configuration information of the reference signal for positioning is updated is obtained in the paging PDCCH, or updated configuration information of the reference signal for positioning is obtained in the paging PDSCH scheduled by the paging PDCCH.

Optionally, the first indication information further includes indication information for indicating whether to enter a connected state and to update the configuration information of the reference signal for positioning.

Optionally, the positioning apparatus 80 further includes:
a first initiation module, configured to initiate, in a case that the first indication information includes the indication information for indicating whether to enter the connected state and to update the configuration information of the reference signal for positioning or the first indication information does not include indication information for indicating that the connected state is not entered to update the configuration information of the reference signal for positioning, a random access to enter the connected state and to update the configuration information of the reference signal for positioning.

Optionally, the positioning apparatus 80 further includes:
a first transmitting module, configured to transmit first feedback information, the first feedback information being used for indicating that the first indication information has been received.

Optionally, the first feedback information is transmitted in the idle state or the inactive state or transmitted after a terminal enters the connected state.

Optionally, the first feedback information includes at least one of the following:
a feedback reason, the feedback reason including at least one of the following: a feedback indicated by availability of the reference signal for positioning, an update feedback of the configuration information of the reference signal for positioning, and an update feedback of the configuration information of the reference signal for positioning initiated by the network-side device; and
an update response to the configuration information of the reference signal for positioning, the update response being used for responding to indication information, in the first indication information, for indicating whether the configuration information of the reference signal for positioning is updated.

Optionally, the positioning apparatus 80 further includes: a second receiving module, configured to receive updated configuration information of the reference signal for positioning.

Optionally, the updated configuration information of the reference signal for positioning is received in one of the following manners:
obtaining the updated configuration information of the reference signal for positioning in an RRC release message;
obtaining the updated configuration information of the reference signal for positioning in a PDSCH scheduled by a PDCCH scrambled by a C-RNTI; and
receiving the updated configuration information of the reference signal for positioning after entering the connected state.

Optionally, the positioning apparatus 80 further includes:
a third execution module, configured to perform, in a case that the terminal is configured with an initial downlink BWP, one of the following by the terminal:
receiving the downlink reference signal for positioning inside of the initial downlink BWP;
receiving a downlink reference signal for positioning with the same parameter configuration as the initial downlink BWP inside of the initial downlink BWP;
in a case that the downlink reference signal for positioning and a first signal are repeated or collided or transmitted in the same symbol, skipping receiving, by the terminal, the downlink reference signal for positioning, the first signal including at least one of the following: SIB 1, other SIBs than SIB1, Msg2, MSg4, MsgB, a PDCCH scheduling SIB1, and an SSB;
receiving, by the terminal, the downlink reference signal for positioning outside of the initial downlink BWP; and
performing, by the terminal, BWP handover according to an indication from the network-side device, a protocol agreement, or a selection of the terminal, and receiving the downlink reference signal for positioning on the BWP after handover.

Optionally, the information related to location includes: second indication information, the second indication information being used for indicating information about subsequent data transmission, and the information about the subsequent data transmission including at least one of the following:
whether there is the subsequent data transmission;
a size of the subsequent data transmission;
a period of the subsequent data transmission;
whether an ACK feedback is required for the subsequent data transmission;
service characteristics of data to be transmitted subsequently; and
a type of the data to be transmitted subsequently, the type including at least one of the following: data related to positioning or data related to non-positioning, control plane data or user plane data, and data in signaling radio bearer, in non-access stratum or in data radio bearer.

Optionally, the positioning apparatus 80 further includes: a second transmitting module, configured to transmit the data to be transmitted subsequently on a PUSCH scheduled by a PDCCH configured by a network-side device.

Optionally, the PDCCH configured by the network-side device carries a type indication of scheduled uplink data. Transmitting the data to be transmitted subsequently on the PUSCH scheduled by the PDCCH configured by the network-side device includes: transmitting the data to be transmitted subsequently corresponding to a type indicated by the type indication on the PUSCH scheduled by the PDCCH configured by the network-side device.

Optionally, the positioning apparatus 80 further includes:
a third transmitting module, configured to transmit third indication information, the third indication information being used for indicating that configuration information of a reference signal for positioning needs to be updated, and the reference signal for positioning including at least one of an uplink reference signal for positioning and a downlink reference signal for positioning.

Optionally, the third indication information is transmitted in an SDT manner or transmitted after the terminal enters a connected state.

Optionally, the third indication information further includes: a reason for transmitting the third indication information, the reason including at least one of the following: the terminal initiates update of the configuration information of the reference signal for positioning, update of the configuration information of the reference signal for positioning, and the configuration information of the reference signal for positioning is unavailable.

Optionally, the reference signal for positioning indicated by the third indication information is one of the following granularities:
reference signals for positioning under one or more groups of the configuration information of the reference signal for positioning;
one or more reference signal for positioning resources;
one or more reference signal for positioning resource sets;
one or more reference signals for positioning under a TRP;
reference signals for positioning under one or more frequency layers; and
reference signals for positioning under all frequency layers.

Optionally, the third indication information further includes at least one of the following:
an RRM measurement result of a serving cell;
an RRM measurement result of a neighboring cell;
a measurement result of a reference signal for positioning of the serving cell; and
a measurement result of a reference signal for positioning of the neighboring cell.

Optionally, the measurement result includes at least one of the following: a reference signal identifier, measurement results of N best beams higher than a threshold, indicators of N best beams higher than the threshold, a measurement result of an optimal beam, an indicator of an optimal beam, measurement results of N beams with the strongest RSRP of first arrival path, indicators of N beams with the strongest RSRP of first arrival path, and N is defined by protocol, indicated by the network-side device or selected by the terminal.

Optionally, transmitting the third indication information includes:
transmitting, by the terminal, the third indication information in a case that at least one of the following conditions is satisfied:
transmitting the third indication information in a case that the terminal detects that adjustment of a tracking area exceeds a first tracking area threshold and the terminal does not enter a connected state;
transmitting the third indication information in a case that the terminal detects that a difference between two consecutive first measurement values exceeds a first measurement threshold and the terminal does not enter the connected state, the first measurement value including at least one of the following: measurement information of an SSB, measurement information of paging or Msg2 or Msg4 or MsgB, and measurement information of the reference signal for positioning;
transmitting the third indication information in a case that the terminal detects that a second timer expires and the terminal does not enter a connected state;
transmitting the third indication information in a case that handover of the resident cell of the terminal is implemented;
transmitting the third indication information in a case that handover of the resident cell of the terminal is implemented and that the downlink reference signal for positioning is not receivable, the information related to location is not reportable or the uplink reference signal for positioning is not transmittable; and
transmitting the third indication information in a case that the terminal moves out of a pre-configured valid area of the configuration information of the reference signal for positioning.

Optionally, the pre-configured valid area of the configuration information of the reference signal for positioning is a certain cell, a certain cell list, or a certain or some areas covered by the SSB.

Optionally, the positioning apparatus 80 further includes:
a third receiving module, configured to receive first indication information in the idle state or the inactive state, the first indication information including at least one of the following:
availability information of a reference signal for positioning or availability information of configuration information of the reference signal for positioning; and
update information of configuration information of a reference signal for positioning,
where the reference signal for positioning includes at least one of the following: the uplink reference signal for positioning and the downlink reference signal for positioning.

Optionally, the positioning apparatus 80 further includes:
a fourth receiving module, configured to start a third timer after transmitting the third indication information and to receive the first indication information before the third timer expires.

Optionally, reporting the information related to location includes:
reporting measurement information, the measurement information including at least one of the following:
an RRM measurement result of a serving cell;
an RRM measurement result of a neighboring cell;
a measurement result of a reference signal for positioning of the serving cell; and
a measurement result of a reference signal for positioning of the neighboring cell.

Optionally, the measurement information is reported in an SDT manner.

Optionally, the measurement information is reported periodically.

Optionally, the positioning apparatus 80 further includes:
a fifth receiving module, configured to receive a report configuration of the measurement information, the report configuration including at least one of the following:
report period;
period offset;
number of periods;
contents of reported measurement results; and
cell identifier associated with execution of RRM measurement.

Optionally, receiving the report configuration of the measurement information includes at least one of the following:
obtaining the report configuration of the measurement information in a broadcast message;
obtaining the report configuration of the measurement information in an RRC dedicated message; and
obtaining the report configuration of the measurement information in an RRC release message.

Optionally, the uplink reference signal for positioning includes: an aperiodic SRS or a semi-persistent SRS.

Optionally, transmitting the aperiodic SRS includes at least one of the following:
transmitting the aperiodic SRS triggered by a PDCCH scrambled by a C-RNTI; and
transmitting the aperiodic SRS by the PDCCH scrambled by the C-RNTI and/or after contention resolution is successful and before an RRC release message.

Optionally, transmitting the semi-persistent SRS includes at least one of the following:
transmitting, by activation, the semi-persistent SRS by the PDSCH scheduled by the network-side device; and
receiving the semi-persistent SRS by the PDSCH scheduled by the network-side device and/or after contention resolution is successful and before the RRC release message.

Optionally, the positioning apparatus 80 further includes:
a fourth transmitting module, configured to transmit request information in an SDT manner, the request information being used for requesting a network-side device to trigger the aperiodic SRS or activate the semi-persistent SRS, and the request information including at least one of the following:
an aperiodic SRS trigger request or a semi-persistent SRS activation request;
an uplink positioning request; and
event information.

Optionally, transmitting the request information in the SDT manner includes:
transmitting the request information in the SDT manner in a case that an event occurs, the event including at least one of the following: an area event and an action event.

Optionally, the positioning apparatus 80 further includes:
a fifth transmitting module, configured to transmit fourth indication information, the fourth indication information being used for indicating timing change of the uplink reference signal for positioning.

Optionally, transmitting the fourth indication information includes one of the following:
transmitting the fourth indication information in an SDT manner; and
transmitting the fourth indication information after entering the connected state.

Optionally, the fourth indication information further includes:
an amount of the timing change of the uplink reference signal for positioning;
a cause of the timing change of the uplink reference signal for positioning, the cause including at least one of the following: handover of a resident cell or cell reselection of the terminal, automatic adjustment of timing of the uplink reference signal for positioning by the terminal, and receiving of a timing advance command from the resident cell by the terminal.

Optionally, transmitting the fourth indication information includes: transmitting the fourth indication information in a case that at least one of the following conditions is satisfied: handover of a resident cell or cell reselection of the terminal, automatic adjustment of timing of the uplink reference signal for positioning by the terminal, and receiving of a timing advance (Timing advance) command from the resident cell by the terminal.

Optionally, the positioning apparatus 80 further includes: a sixth transmitting module, configured to transmit fifth indication information, the fifth indication information being used for indicating change of a resident cell.

Optionally, transmitting the fifth indication information includes one of the following:
transmitting the fifth indication information in an SDT manner; and
transmitting the fifth indication information after entering the connected state.

Optionally, the fifth indication information further includes identification information of the resident cell.

Optionally, transmitting the fifth indication information includes:
transmitting the fifth indication information in a case that handover of the resident cell of the terminal is implemented.

Optionally, the positioning apparatus 80 further includes:
a second initiation module, configured to initiate, by the terminal, a random access to enter the connected state or transmit third indication information in a case that handover of the resident cell of the terminal is implemented and the terminal is incapable of performing at least one of the following behaviors:
transmitting an uplink reference signal for positioning;
measuring a downlink reference signal for positioning; and
reporting information related to location,
where the third indication information is used for indicating that configuration information of a reference signal for positioning needs to be updated, and the reference signal for positioning includes at least one of the uplink reference signal for positioning and the downlink reference signal for positioning.

Optionally, performing the positioning behavior in an idle state or an inactive state further includes at least one of the following:
in a case that a distance between a time domain location of an uplink reference signal for positioning to be transmitted and a paging occasion exceeds a distance X, ignoring, by the terminal, the uplink reference signal for positioning to be transmitted;
in a case that a distance between a time domain location of a downlink reference signal for positioning and the paging occasion exceeds the distance X, ignoring, by the terminal, measurement of the downlink reference signal for positioning;
in a case that a distance between a time domain location where information related to location is reported and the paging occasion exceeds the distance X, ignoring, by the terminal, reporting of the information related to location; and
in a case that a distance between the time domain location of the uplink reference signal for positioning to be transmitted and the time domain location of the downlink reference signal for positioning exceeds the distance X, ignoring, by the terminal, the uplink reference signal for positioning to be transmitted.

Optionally, the paging occasion is a paging occasion in a resident cell.

Optionally, the reporting information related to location includes: reporting an association relation between a positioning measurement result and a timing error group, and/or, an association relation between an uplink reference signal for positioning and the timing error group.

Optionally, the association relation between the uplink reference signal for positioning and the timing error group is contained in the positioning measurement result in a downlink and uplink positioning method.

Optionally, receiving and measuring the downlink reference signal for positioning includes: receiving and measuring the downlink reference signal for positioning according to a spatial beam relation between the downlink reference signal for positioning and a synchronization signal block SSB,
where the spatial beam relation between the downlink reference signal for positioning and the synchronization signal block SSB is obtained by a spatial QCL relation, indicated by a network-side device, between the downlink reference signal for positioning and the SSB; or, obtained by a default relation between a downlink reference signal for positioning resource and an SSB actually transmitted in synchronization signal block burst under a TRP where the downlink reference signal for positioning resource is located.

The positioning apparatus in the embodiments of this application may be an apparatus, an apparatus or electronic device with an operating system, and a component, an integrated circuit, or a chip in a terminal. The apparatus or electronic device may be a mobile terminal or may be a non-mobile terminal. For example, the mobile terminal may include, but is not limited to, the type of the terminal 11 listed above, and the non-mobile terminal may be a server, a network attached storage (Network Attached Storage, NAS), a personal computer (Personal Computer, PC), a television (Television, TV), an automatic teller machine, or a self-service machine, and the like. The embodiments of this application are not specifically limited.

The positioning apparatus provided by the embodiments of this application can implement the processes implemented by the method embodiments of FIG. 6 and achieve the same technical effect. To avoid repetition, details are not described herein again.

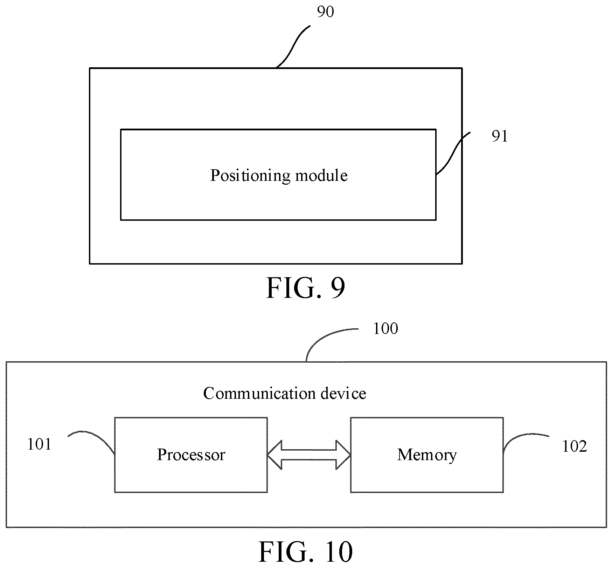

Referring to FIG. 9, the embodiments of this application further provide a positioning apparatus 90, including:
a positioning module 91, configured to perform a positioning behavior, where performing the positioning behavior includes at least one of the following:
transmitting a downlink reference signal for positioning to a terminal in an idle state or an inactive state;
receiving information related to location reported by the terminal in the idle state or the inactive state; and
measuring an uplink reference signal for positioning transmitted by the terminal in the idle state or the inactive state.

Optionally, the positioning apparatus 90 further includes:
a first transmitting module, configured to transmit first indication information to the terminal in the idle state or the inactive state, the first indication information including at least one of the following:
availability information of a reference signal for positioning or availability information of configuration information of the reference signal for positioning; and
update information of configuration information of a reference signal for positioning,
where the reference signal for positioning includes at least one of the following: the uplink reference signal for positioning and the downlink reference signal for positioning.

Optionally, the update information of the configuration information of the reference signal for positioning includes at least one of the following:
indication information for indicating whether the configuration information of the reference signal for positioning is updated; and
updated configuration information of the reference signal for positioning.

Optionally, the indication information for indicating whether the configuration information of the reference signal for positioning is updated or the updated configuration information of the reference signal for positioning includes at least one of the following:
on or off of the configuration information of the reference signal for positioning;
increase or decrease of a bandwidth of the reference signal for positioning;
increase or decrease of a period of the reference signal for positioning;
change of muting configuration of the reference signal for positioning;
change of spatial relation configuration of the reference signal for positioning; and
change of path loss configuration of the reference signal for positioning.

Optionally, the reference signal for positioning indicated by the first indication information is one of the following granularities:
reference signals for positioning corresponding to one or more groups of the configuration information of the reference signal for positioning;
one or more reference signal for positioning resources;
one or more reference signal for positioning resource sets;
one or more reference signals for positioning under a TRP;
reference signals for positioning under one or more frequency layers; and
reference signals for positioning under all frequency layers.

Optionally, the first indication information is carried in at least one of the following manners:
carrying in a paging PDCCH;
carrying in a paging PDSCH scheduled by the paging PDCCH;
carrying in a paging early indication;
carrying during a random access process or a small data transmission process;
carrying in a broadcast message;
carrying in an RRC release message;
carrying in a PDCCH and/or a PDSCH according to a downlink monitoring occasion and/or a monitoring window configured by a network-side device; and
carrying from a downlink scheduling resource PDSCH configured by the network-side device.

Optionally, the first indication information is represented by bits of a short message in the paging PDCCH or by reserved bits in the paging PDCCH.

Optionally, indication information for indicating whether the configuration information of the reference signal for positioning is updated is carried in the paging PDCCH, and updated configuration information of the reference signal for positioning is carried in the paging PDSCH scheduled by the paging PDCCH.

Optionally, the first indication information further includes indication information for indicating whether to enter a connected state and to update the configuration information of the reference signal for positioning.

Optionally, the positioning apparatus 90 further includes:
a first receiving module, configured to receive first feedback information transmitted by the terminal, the first feedback information being used for indicating that the first indication information has been received.

Optionally, the first feedback information includes at least one of the following:
a feedback reason, the feedback reason including at least one of the following: a feedback indicated by availability of the reference signal for positioning, an update feedback of the configuration information of the reference signal for positioning, and an update feedback of the configuration information of the reference signal for positioning initiated by the network-side device; and
an update response to the configuration information of the reference signal for positioning, the update response being used for responding to indication information, in the first indication information, for indicating whether the configuration information of the reference signal for positioning is updated.

Optionally, the positioning apparatus 90 further includes:
a second transmitting module, configured to transmit updated configuration information of the reference signal for positioning to the terminal.

Optionally, the updated configuration information of the reference signal for positioning is carried in one of the following manners:
carrying in an RRC release message;
carrying in a PDSCH scheduled by a PDCCH scrambled by a C-RNTI; and
carrying in an RRC dedicated message.

Optionally, the information related to location includes: second indication information, the second indication information being used for indicating information about subsequent data transmission, and the information about the subsequent data transmission including at least one of the following:
whether there is the subsequent data transmission;
a size of the subsequent data transmission;
a period of the subsequent data transmission;
whether an ACK feedback is required for the subsequent data transmission;
service characteristics of data to be transmitted subsequently; and
a type of the data to be transmitted subsequently, the type including at least one of the following: data related to positioning or data related to non-positioning, control plane data or user plane data, and data in signaling radio bearer, in non-access stratum or in data radio bearer.

Optionally, the positioning apparatus 90 further includes:
a second receiving module, configured to receive the data to be transmitted subsequently on a PUSCH scheduled by a PDCCH configured by the network-side device.

Optionally, the positioning apparatus 90 further includes:
a third receiving module, configured to receive third indication information transmitted by the terminal, the third indication information being used for indicating that configuration information of a reference signal for positioning needs to be updated, and the reference signal for positioning including at least one of an uplink reference signal for positioning and a downlink reference signal for positioning.

Optionally, the third indication information further includes: a reason for transmitting the third indication information, the reason including at least one of the following: the terminal initiates update of the configuration information of the reference signal for positioning, update of the configuration information of the reference signal for positioning, and the configuration information of the reference signal for positioning is unavailable.

Optionally, the reference signal for positioning indicated by the third indication information is one of the following granularities:
reference signals for positioning under one or more groups of the configuration information of the reference signal for positioning;
one or more reference signal for positioning resources;
one or more reference signal for positioning resource sets;
one or more reference signals for positioning under a TRP;
reference signals for positioning under one or more frequency layers; and
reference signals for positioning under all frequency layers.

Optionally, the third indication information further includes at least one of the following:
an RRM measurement result of a serving cell;
an RRM measurement result of a neighboring cell;
a measurement result of a reference signal for positioning of the serving cell; and
a measurement result of a reference signal for positioning of the neighboring cell.

Optionally, the measurement result includes at least one of the following: a reference signal identifier, measurement results of N best beams higher than a threshold, indicators of N best beams higher than the threshold, a measurement result of an optimal beam, an indicator of an optimal beam, measurement results of N beams with the strongest RSRP of first arrival path, indicators of N beams with the strongest RSRP of first arrival path, and N is defined by protocol, indicated by the network-side device or selected by the terminal.

Optionally, the positioning apparatus 90 further includes:
a third transmitting module, configured to transmit first indication information to the terminal, the first indication information including at least one of the following:
availability information of a reference signal for positioning or availability information of configuration information of the reference signal for positioning; and
update information of configuration information of a reference signal for positioning,
where the reference signal for positioning includes at least one of the following: the uplink reference signal for positioning and the downlink reference signal for positioning.

Optionally, the information related to location includes: measurement information, the measurement information including at least one of the following:
an RRM measurement result of a serving cell;
an RRM measurement result of a neighboring cell;
a measurement result of a reference signal for positioning of the serving cell; and
a measurement result of a reference signal for positioning of the neighboring cell.

Optionally, the measurement information is reported periodically by the terminal.

Optionally, the positioning apparatus further includes:
a fourth transmitting module, configured to transmit a report configuration of the measurement information to the terminal, the report configuration including at least one of the following:
report period;
period offset;
number of periods;
contents of reported measurement results; and
cell identifier associated with execution of RRM measurement.

Optionally, the report configuration of the measurement information is carried in at least one of the following manners:
carrying in a broadcast message;
carrying in an RRC dedicated message; and
carrying in an RRC release message.

Optionally, the uplink reference signal for positioning includes: an aperiodic SRS or a semi-persistent SRS.

Optionally, the positioning apparatus further includes:
a fifth transmitting module, configured to transmit trigger information to the terminal through the PDCCH scrambled by the C-RNTI, so as to trigger the terminal to transmit the aperiodic SRS,
where the aperiodic SRS is transmitted by the PDCCH scrambled by the C-RNTI and/or after contention resolution is successful and before the RRC release message.

Optionally, the positioning apparatus 90 further includes:
a sixth transmitting module, configured to transmit activation information by the PDSCH scheduled by the network-side device, so as to activate the terminal to transmit the semi-persistent SRS,
where the semi-persistent SRS is received by the PDSCH scheduled by the network-side device and/or after contention resolution is successful and before the RRC release message.

Optionally, the positioning apparatus 90 further includes:
a third receiving module, configured to receive request information transmitted by the terminal in an SDT manner, the request information being used for requesting a network-side device to trigger the aperiodic SRS or activate the semi-persistent SRS, and the request information including at least one of the following:
an aperiodic SRS trigger request or a semi-persistent SRS activation request;
an uplink positioning request; and
event information.

Optionally, the positioning apparatus 90 further includes:
a fourth receiving module, configured to receive fourth indication information transmitted by the terminal, the fourth indication information being used for indicating timing change of the uplink reference signal for positioning.

Optionally, the fourth indication information further includes:
an amount of the timing change of the uplink reference signal for positioning;
a cause of the timing change of the uplink reference signal for positioning, the cause including at least one of the following: handover of a resident cell or cell reselection of the terminal, automatic adjustment of timing of the uplink reference signal for positioning by the terminal, and receiving of a timing advance command from the resident cell by the terminal.

Optionally, the positioning apparatus 90 further includes:
a fifth receiving module, configured to receive fifth indication information transmitted by the terminal, the fifth indication information being used for indicating change of a resident cell.

Optionally, the fifth indication information further includes identification information of the resident cell.

Optionally, receiving the information related to location reported by the terminal in the idle state or the inactive state includes:
receiving an association relation, reported by the terminal in the idle state or the inactive state, between a positioning measurement result and a timing error group, and/or, an association relation between an uplink reference signal for positioning and the timing error group.

The embodiments of this application further provide a positioning apparatus, including:
a positioning module, configured to perform a positioning behavior in an idle state, an inactive state, or a connected state, where performing the positioning behavior includes:
reporting information related to location, the information related to location including an association relation between a positioning measurement result and a timing error group, and/or, an association relation between an uplink reference signal for positioning and the timing error group.

The association relation is used for assisting the network-side device to perform positioning calculation, thereby reducing or eliminating the influence of the timing error group on positioning accuracy and improving the positioning accuracy.

Optionally, the association relation between the uplink reference signal for positioning and the timing error group is contained in the positioning measurement result in a downlink and uplink positioning method.

The embodiments of this application further provide a positioning apparatus, including:
a positioning module, configured to perform a positioning behavior, where performing the positioning behavior includes:
receiving information related to location reported by a terminal in an idle state or an inactive state, the information related to location including an association relation between a positioning measurement result and a timing error group, and/or, an association relation between an uplink reference signal for positioning and the timing error group.

The association relation is used for assisting the network-side device to perform positioning calculation, thereby reducing or eliminating the influence of the timing error group on positioning accuracy and improving the positioning accuracy.

Optionally, the association relation between the uplink reference signal for positioning and the timing error group is contained in the positioning measurement result in a downlink and uplink positioning method.

As shown in FIG. 10, the embodiments of this application further provide a communication device 100, including a processor 101, a memory 102, and programs or instructions stored in the memory 102 and executable on the processor 101. For example, the communication device 100 is a terminal, and the programs or instructions, when executed by the processor 101, implement the various processes of the foregoing positioning method embodiments performed by the terminal and achieve the same technical effect. The communication device 100 is a network-side device, and the programs or instructions, when executed by the processor 101, implement the various processes of the foregoing positioning method embodiments performed by the network-side device and achieve the same technical effect, which is not described herein again to avoid repetition.

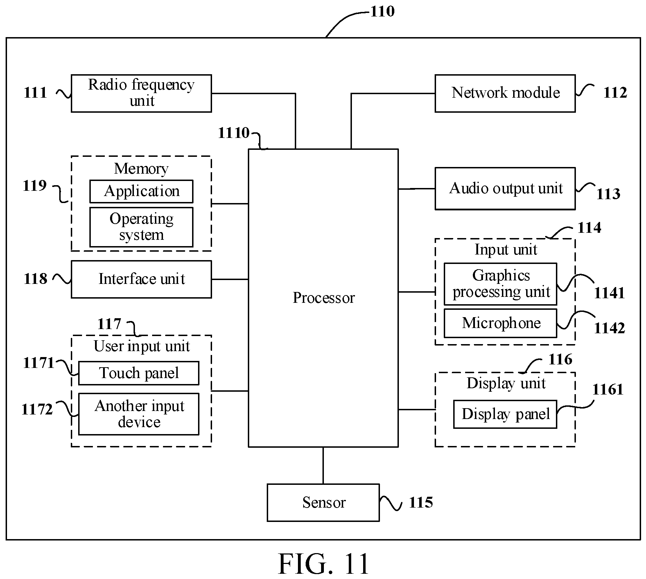

The embodiments of this application further provide a terminal, including a processor and a communication interface. The processor is configured to perform, by the terminal, a positioning behavior in an idle state or an inactive state, where performing the positioning behavior includes at least one of the following: receiving and measuring a downlink reference signal for positioning; reporting information related to location; and transmitting an uplink reference signal for positioning. The terminal embodiment corresponds to the foregoing terminal-side method embodiments. Each implementation process and implementation mode of the foregoing method embodiments may be applied to the terminal embodiment, and can achieve the same technical effect. Specifically, FIG. 11 is a schematic diagram of a hardware structure of a terminal according to an embodiment of this application.

The terminal 110 includes, but is not limited to: at least some components such as a radio frequency unit 111, a network module 112, an audio output unit 113, an input unit 114, a sensor 115, a display unit 116, a user input unit 117, an interface unit 118, a memory 119, and a processor 1110.

A person skilled in the art may understand that the terminal 110 may further include a power supply (such as a battery) for supplying power to the components. The power supply may be logically connected to the processor 1110 by a power management system, thereby implementing functions such as charging, discharging, and power consumption management by using the power management system. The terminal structure shown in FIG. 11 does not constitute a limitation on the terminal, and the terminal may include more or fewer components than shown, or combine some components, or have different component arrangements, which are not described herein in detail.

It is to be understood that in the embodiments of this application, the input unit 114 may include a graphics processing unit (Graphics Processing Unit, GPU) 1141 and a microphone 1142. The graphics processing unit 1141 performs processing on image data of a static picture or a video that is obtained by an image acquisition apparatus (for example, a camera) in a video acquisition mode or an image acquisition mode. The display unit 116 may include a display panel 1161. The display panel 1161 may be configured in the form of a liquid crystal display, an organic light-emitting diode, or the like. The user input unit 117 includes a touch panel 1171 and another input device 1172. The touch panel 1171 is also referred to as a touch screen. The touch panel 1171 may include two parts: a touch detection apparatus and a touch controller. The another input device 1172 may include, but not limited to, a physical keyboard, a functional key (such as a volume control key or a switch key), a track ball, a mouse, and a joystick, which are not described herein in detail.

In the embodiments of this application, the radio frequency unit 111 receives downlink data from a network-side device and then transmits the downlink data to the processor 1110 for processing. In addition, uplink data is transmitted to the network-side device. Generally, the radio frequency unit 111 includes, but is not limited to, an antenna, at least one amplifier, a transceiver, a coupler, a low noise amplifier, a duplexer, and the like.

The memory 119 may be configured to store software programs or instructions and various data. The memory 119 may mainly include a program or instruction storage area and a data storage area. The program or instruction storage area may store an operating system, application programs or instructions required by at least one function (for example, a sound playback function and an image display function), and the like. In addition, the memory 119 may include a high-speed random access memory and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the memory is at least one magnetic disk storage device, a flash memory device, or another non-volatile solid-state storage device.

The processor 1110 may include one or more processing units. Optionally, the processor 1110 may integrate an application processor and a modem processor, where the application processor mainly processes an operating system, a user interface, application programs or instructions, and the like, and the modem processor mainly processes wireless communication such as a baseband processor. It may be understood that the modem processor may not be integrated into the processor 1110.

In some embodiments, the processor 1110 is configured to perform, by the terminal, a positioning behavior in an idle state or an inactive state, where performing the positioning behavior includes at least one of the following:
receiving and measuring a downlink reference signal for positioning;
reporting information related to location; and
transmitting an uplink reference signal for positioning.

In the embodiments of this application, a positioning function is executed in an RRC inactive state or an RRC idle state to ensure positioning performance and low power consumption.

Optionally, the radio frequency module 111 is configured to receive first indication information in the idle state or the inactive state, the first indication information including at least one of the following:
availability information of a reference signal for positioning or availability information of configuration information of the reference signal for positioning; and
update information of configuration information of a reference signal for positioning,
where the reference signal for positioning includes at least one of the following: the uplink reference signal for positioning and the downlink reference signal for positioning.

Optionally, the radio frequency module 111 is configured to: in a case that the first indication information indicates that the reference signal for positioning is unavailable, assume, by the terminal, that the reference signal for positioning is not present, or that the reference signal for positioning is not transmitted, or that the reference signal for positioning is stopped from being transmitted, or that the terminal does not transmit the reference signal for positioning, or that the terminal stops transmitting the reference signal for positioning;
or
in a case that the first indication information indicates that the configuration information of the reference signal for positioning is unavailable, assume, by the terminal, that the reference signal for positioning corresponding to the configuration information of the reference signal for positioning is not present, or that the reference signal for positioning corresponding to the configuration information of the reference signal for positioning is not transmitted, or that the reference signal for positioning corresponding to the configuration information of the reference signal for positioning is stopped from being transmitted, or that the terminal does not transmit the reference signal for positioning corresponding to the configuration information of the reference signal for positioning, or that the terminal stops transmitting the reference signal for positioning corresponding to the configuration information of the reference signal for positioning.

Optionally, the update information of the configuration information of the reference signal for positioning includes at least one of the following:
indication information for indicating whether the configuration information of the reference signal for positioning is updated; and
updated configuration information of the reference signal for positioning.

Optionally, the indication information for indicating whether the configuration information of the reference signal for positioning is updated or the updated configuration information of the reference signal for positioning includes at least one of the following:
on or off of the configuration information of the reference signal for positioning;
increase or decrease of a bandwidth of the reference signal for positioning;
increase or decrease of a period of the reference signal for positioning;
change of muting configuration of the reference signal for positioning;
change of spatial relation configuration of the reference signal for positioning; and
change of path loss configuration of the reference signal for positioning.

Optionally, the reference signal for positioning indicated by the first indication information is one of the following granularities:
reference signals for positioning corresponding to one or more groups of the configuration information of the reference signal for positioning;
one or more reference signal for positioning resources;
one or more reference signal for positioning resource sets;
one or more reference signals for positioning under a TRP;
reference signals for positioning under one or more frequency layers; and
reference signals for positioning under all frequency layers.

Optionally, the receiving first indication information in the idle state or the inactive state includes at least one of the following:
obtaining the first indication information in a paging PDCCH;
obtaining the first indication information in a paging PDSCH scheduled by the paging PDCCH;
obtaining the first indication information in a paging early indication;
obtaining the first indication information during a random access process or a small data transmission process;
obtaining the first indication information in a broadcast message;
obtaining the first indication information in an RRC release message;
obtaining the first indication information in a PDCCH and/or a PDSCH according to a downlink monitoring occasion and/or a monitoring window configured by a network-side device; and
obtaining the first indication information from a downlink scheduling resource PDSCH configured by the network-side device.

Optionally, the first indication information is represented by bits of a short message in the paging PDCCH or by reserved bits in the paging PDCCH.

Optionally, indication information for indicating whether the configuration information of the reference signal for positioning is updated is obtained in the paging PDCCH, or updated configuration information of the reference signal for positioning is obtained in the paging PDSCH scheduled by the paging PDCCH.

Optionally, the first indication information further includes indication information for indicating whether to enter a connected state and to update the configuration information of the reference signal for positioning.

Optionally, the radio frequency module 111 is configured to initiate, in a case that the first indication information includes the indication information for indicating whether to enter the connected state and to update the configuration information of the reference signal for positioning or the first indication information does not include indication information for indicating that the connected state is not entered to update the configuration information of the reference signal for positioning, a random access to enter the connected state and to update the configuration information of the reference signal for positioning.

Optionally, the radio frequency module 111 is configured to transmit first feedback information, the first feedback information being used for indicating that the first indication information has been received.

Optionally, the first feedback information is transmitted in the idle state or the inactive state or transmitted after a terminal enters the connected state.

Optionally, the first feedback information includes at least one of the following:
a feedback reason, the feedback reason including at least one of the following: a feedback indicated by availability of the reference signal for positioning, an update feedback of the configuration information of the reference signal for positioning, and an update feedback of the configuration information of the reference signal for positioning initiated by the network-side device; and
an update response to the configuration information of the reference signal for positioning, the update response being used for responding to indication information, in the first indication information, for indicating whether the configuration information of the reference signal for positioning is updated.

Optionally, the radio frequency module 111 is configured to receive updated configuration information of the reference signal for positioning.

Optionally, the updated configuration information of the reference signal for positioning is received in one of the following manners:
obtaining the updated configuration information of the reference signal for positioning in an RRC release message;
obtaining the updated configuration information of the reference signal for positioning in a PDSCH scheduled by a PDCCH scrambled by a C-RNTI; and
receiving the updated configuration information of the reference signal for positioning after entering the connected state.

Optionally, the processing module 1110 is configured to perform, in a case that the terminal is configured with an initial downlink BWP, one of the following:
receiving the downlink reference signal for positioning inside of the initial downlink BWP;
receiving a downlink reference signal for positioning with the same parameter configuration as the initial downlink BWP inside of the initial downlink BWP;
in a case that the downlink reference signal for positioning and a first signal are repeated or collided or transmitted in the same symbol, skipping receiving, by the terminal, the downlink reference signal for positioning, the first signal including at least one of the following: SIB 1, other SIBs than SIB1, Msg2, MSg4, MsgB, a PDCCH scheduling SIB1, and an SSB;
receiving, by the terminal, the downlink reference signal for positioning outside of the initial downlink BWP; and
performing, by the terminal, BWP handover according to an indication from the network-side device, a protocol agreement, or a selection of the terminal, and receiving the downlink reference signal for positioning on the BWP after handover.

Optionally, the information related to location includes: second indication information, the second indication information being used for indicating information about subsequent data transmission, and the information about the subsequent data transmission including at least one of the following:
whether there is the subsequent data transmission;
a size of the subsequent data transmission;
a period of the subsequent data transmission;
whether an ACK feedback is required for the subsequent data transmission;
service characteristics of data to be transmitted subsequently; and
a type of the data to be transmitted subsequently, the type including at least one of the following: data related to positioning or data related to non-positioning, control plane data or user plane data, and data in signaling radio bearer, in non-access stratum or in data radio bearer.

Optionally, the radio frequency module 111 is configured to transmit the data to be transmitted subsequently on a PUSCH scheduled by a PDCCH configured by a network-side device.

Optionally, the PDCCH configured by the network-side device carries a type indication of scheduled uplink data. Transmitting the data to be transmitted subsequently on the PUSCH scheduled by the PDCCH configured by the network-side device includes:
transmitting the data to be transmitted subsequently corresponding to a type indicated by the type indication on the PUSCH scheduled by the PDCCH configured by the network-side device.

Optionally, the radio frequency module 111 is configured to transmit third indication information, the third indication information being used for indicating that configuration information of a reference signal for positioning needs to be updated, and the reference signal for positioning including at least one of an uplink reference signal for positioning and a downlink reference signal for positioning.

Optionally, the third indication information is transmitted in an SDT manner or transmitted after the terminal enters a connected state.

Optionally, the third indication information further includes: a reason for transmitting the third indication information, the reason including at least one of the following: the terminal initiates update of the configuration information of the reference signal for positioning, update of the configuration information of the reference signal for positioning, and the configuration information of the reference signal for positioning is unavailable.

Optionally, the reference signal for positioning indicated by the third indication information is one of the following granularities:
reference signals for positioning under one or more groups of the configuration information of the reference signal for positioning;
one or more reference signal for positioning resources;
one or more reference signal for positioning resource sets;
one or more reference signals for positioning under a TRP;
reference signals for positioning under one or more frequency layers; and
reference signals for positioning under all frequency layers.

Optionally, the third indication information further includes at least one of the following:
an RRM measurement result of a serving cell;
an RRM measurement result of a neighboring cell;
a measurement result of a reference signal for positioning of the serving cell; and
a measurement result of a reference signal for positioning of the neighboring cell.

Optionally, the measurement result includes at least one of the following: a reference signal identifier, measurement results of N best beams higher than a threshold, indicators of N best beams higher than the threshold, a measurement result of an optimal beam, an indicator of an optimal beam, measurement results of N beams with the strongest RSRP of first arrival path, indicators of N beams with the strongest RSRP of first arrival path, and N is defined by protocol, indicated by the network-side device or selected by the terminal.

Optionally, the radio frequency module 111 is configured to transmit, by the terminal, the third indication information in a case that at least one of the following conditions is satisfied:
transmitting the third indication information in a case that the terminal detects that adjustment of a tracking area exceeds a first tracking area threshold and the terminal does not enter a connected state;
transmitting the third indication information in a case that the terminal detects that a difference between two consecutive first measurement values exceeds a first measurement threshold and the terminal does not enter the connected state, the first measurement value including at least one of the following: measurement information of an SSB, measurement information of paging or Msg2 or Msg4 or MsgB, and measurement information of the reference signal for positioning;
transmitting the third indication information in a case that the terminal detects that a second timer expires and the terminal does not enter a connected state;
transmitting the third indication information in a case that handover of the resident cell of the terminal is implemented;
transmitting the third indication information in a case that handover of the resident cell of the terminal is implemented and that the downlink reference signal for positioning is not receivable, the information related to location is not reportable or the uplink reference signal for positioning is not transmittable; and
transmitting the third indication information in a case that the terminal moves out of a pre-configured valid area of the configuration information of the reference signal for positioning.

Optionally, the pre-configured valid area of the configuration information of the reference signal for positioning is a certain cell, a certain cell list, or a certain or some areas covered by the SSB.

Optionally, the radio frequency module 111 is configured to receive first indication information in the idle state or the inactive state, the first indication information including at least one of the following:
availability information of a reference signal for positioning or availability information of configuration information of the reference signal for positioning; and
update information of configuration information of a reference signal for positioning,
where the reference signal for positioning includes at least one of the following: the uplink reference signal for positioning and the downlink reference signal for positioning.

Optionally, the radio frequency module 111 is configured to start a third timer after transmitting the third indication information and to receive the first indication information before the third timer expires.

Optionally, reporting the information related to location includes:
reporting measurement information, the measurement information including at least one of the following:
an RRM measurement result of a serving cell;
an RRM measurement result of a neighboring cell;
a measurement result of a reference signal for positioning of the serving cell; and
a measurement result of a reference signal for positioning of the neighboring cell.

Optionally, the measurement information is reported in an SDT manner.

Optionally, the measurement information is reported periodically.

Optionally, the radio frequency module 111 is configured to receive a report configuration of the measurement information, the report configuration including at least one of the following:
report period;
period offset;
number of periods;
contents of reported measurement results; and
cell identifier associated with execution of RRM measurement.

Optionally, receiving the report configuration of the measurement information includes at least one of the following:
obtaining the report configuration of the measurement information in a broadcast message;
obtaining the report configuration of the measurement information in an RRC dedicated message; and
obtaining the report configuration of the measurement information in an RRC release message.

Optionally, the uplink reference signal for positioning includes: an aperiodic SRS or a semi-persistent SRS.

Optionally, transmitting the aperiodic SRS includes at least one of the following:
transmitting the aperiodic SRS triggered by a PDCCH scrambled by a C-RNTI; and
transmitting the aperiodic SRS by the PDCCH scrambled by the C-RNTI and/or after contention resolution is successful and before an RRC release message.

Optionally, transmitting the semi-persistent SRS includes at least one of the following:
transmitting, by activation, the semi-persistent SRS by the PDSCH scheduled by the network-side device; and
receiving the semi-persistent SRS by the PDSCH scheduled by the network-side device and/or after contention resolution is successful and before the RRC release message.

Optionally, the radio frequency module 111 is configured to transmit request information in an SDT manner, the request information being used for requesting a network-side device to trigger the aperiodic SRS or activate the semi-persistent SRS, and the request information including at least one of the following:
an aperiodic SRS trigger request or a semi-persistent SRS activation request;
an uplink positioning request; and
event information.

Optionally, transmitting the request information in an SDT manner includes:
transmitting the request information in the SDT manner in a case that an event occurs, the event including at least one of the following: an area event and an action event.

Optionally, the radio frequency module 111 is configured to transmit fourth indication information, the fourth indication information being used for indicating timing change of the uplink reference signal for positioning.

Optionally, transmitting the fourth indication information includes one of the following:
transmitting the fourth indication information in an SDT manner; and
transmitting the fourth indication information after entering the connected state.

Optionally, the fourth indication information further includes:
an amount of the timing change of the uplink reference signal for positioning;
a cause of the timing change of the uplink reference signal for positioning, the cause including at least one of the following: handover of a resident cell or cell reselection of the terminal, automatic adjustment of timing of the uplink reference signal for positioning by the terminal, and receiving of a timing advance command from the resident cell by the terminal.

Optionally, transmitting the fourth indication information includes:
transmitting the fourth indication information in a case that at least one of the following conditions is satisfied: handover of a resident cell or cell reselection of the terminal, automatic adjustment of timing of the uplink reference signal for positioning by the terminal, and receiving of a timing advance (Timing advance) command from the resident cell by the terminal.

Optionally, the radio frequency module 111 is configured to transmit fifth indication information, the fifth indication information being used for indicating change of a resident cell.

Optionally, transmitting the fifth indication information includes one of the following:
transmitting the fifth indication information in an SDT manner; and
transmitting the fifth indication information after entering the connected state.

Optionally, the fifth indication information further includes identification information of the resident cell.

Optionally, transmitting the fifth indication information includes: transmitting the fifth indication information in a case that handover of the resident cell of the terminal is implemented.

Optionally, the radio frequency module 111 is configured to initiate, by the terminal, a random access to enter the connected state or transmit third indication information in a case that handover of the resident cell of the terminal is implemented and the terminal is incapable of performing at least one of the following behaviors:
transmitting an uplink reference signal for positioning;
measuring a downlink reference signal for positioning; and
reporting information related to location,
where the third indication information is used for indicating that configuration information of a reference signal for positioning needs to be updated, and the reference signal for positioning includes at least one of the uplink reference signal for positioning and the downlink reference signal for positioning.

Optionally, performing the positioning behavior in an idle state or an inactive state further includes at least one of the following:
in a case that a distance between a time domain location of an uplink reference signal for positioning to be transmitted and a paging occasion exceeds a distance X, ignoring, by the terminal, the uplink reference signal for positioning to be transmitted;
in a case that a distance between a time domain location of a downlink reference signal for positioning and the paging occasion exceeds the distance X, ignoring, by the terminal, measurement of the downlink reference signal for positioning;
in a case that a distance between a time domain location where information related to location is reported and the paging occasion exceeds the distance X, ignoring, by the terminal, reporting of the information related to location; and
in a case that a distance between the time domain location of the uplink reference signal for positioning to be transmitted and the time domain location of the downlink reference signal for positioning exceeds the distance X, ignoring, by the terminal, the uplink reference signal for positioning to be transmitted.

Optionally, the paging occasion is a paging occasion in a resident cell.

Optionally, reporting the information related to location includes: reporting an association relation between a positioning measurement result and a timing error group, and/or, an association relation between an uplink reference signal for positioning and the timing error group.

Optionally, the association relation between the uplink reference signal for positioning and the timing error group is contained in the positioning measurement result in a downlink and uplink positioning method.

Optionally, receiving and measuring the downlink reference signal for positioning includes: receiving and measuring the downlink reference signal for positioning according to a spatial beam relation between the downlink reference signal for positioning and a synchronization signal block SSB,
where the spatial beam relation between the downlink reference signal for positioning and the synchronization signal block SSB is obtained by a spatial QCL relation, indicated by a network-side device, between the downlink reference signal for positioning and the SSB; or, obtained by a default relation between a downlink reference signal for positioning resource and an SSB actually transmitted in synchronization signal block burst under a TRP where the downlink reference signal for positioning resource is located.

In other embodiments, the processor 1110 is configured to perform a positioning behavior in an idle state, an inactive state, or a connected state, where performing the positioning behavior includes at least one of the following:
reporting information related to location, the information related to location including an association relation between a positioning measurement result and a timing error group, and/or, an association relation between an uplink reference signal for positioning and the timing error group.

The association relation is used for assisting the network-side device to perform positioning calculation, thereby reducing or eliminating the influence of the timing error group on positioning accuracy and improving the positioning accuracy.

Optionally, the association relation between the uplink reference signal for positioning and the timing error group is contained in the positioning measurement result in a downlink and uplink positioning method.

The embodiments of this application further provide a network-side device, including a processor and a communication interface. The processor is configured to perform, by the network-side device, a positioning behavior, where performing the positioning behavior includes at least one of the following: transmitting a downlink reference signal for positioning to a terminal in an idle state or an inactive state; receiving information related to location reported by the terminal in the idle state or the inactive state; and measuring an uplink reference signal for positioning transmitted by the terminal in the idle state or the inactive state. The network-side device embodiment corresponds to the foregoing network-side device method embodiments. Each implementation process and implementation mode of the foregoing method embodiments may be applied to the network-side device embodiment, and can achieve the same technical effect.

The embodiments of this application further provide a network-side device, including a processor and a communication interface. The processor is configured to perform a positioning behavior, where performing the positioning behavior includes: receiving information related to location reported by a terminal in an idle state or an inactive state, the information related to location including an association relation between a positioning measurement result and a timing error group, and/or, an association relation between an uplink reference signal for positioning and the timing error group. The network-side device embodiment corresponds to the foregoing network-side device method embodiments. Each implementation process and implementation mode of the foregoing method embodiments may be applied to the network-side device embodiment, and can achieve the same technical effect.

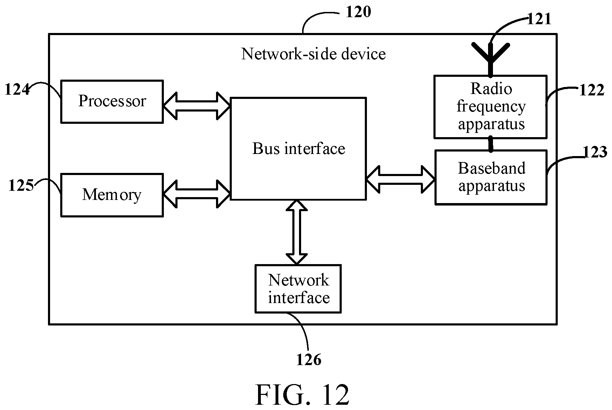

Specifically, the embodiments of this application further provide a network-side device. As shown in FIG. 12, a network device 1200 includes: an antenna 121, a radio frequency apparatus 122, and a baseband apparatus 123. The antenna 121 is connected to the radio frequency apparatus 122. In an uplink direction, the radio frequency apparatus 122 receives information through the antenna 121 and transmits the received information to the baseband apparatus 123 for processing. In a downlink direction, the baseband apparatus 123 processes information to be transmitted and transmits the information to the radio frequency apparatus 122. The radio frequency apparatus 122 processes the received information and transmits the processed information via the antenna 121.

The foregoing band processing apparatus may be located in the baseband apparatus 123. The method performed by the network-side device in the above embodiments may be implemented in the baseband apparatus 123. The baseband apparatus 123 includes a processor 124 and a memory 125.

The baseband apparatus 123 may, for example, include at least one baseband board. Multiple chips are disposed on the baseband board. As shown in FIG. 12, one of the chips is, for example, the processor 124, which is connected to the memory 125 to invoke programs in the memory 125, so as to perform network device operations shown in the above method embodiments.

The baseband apparatus 123 may further include a network interface 126 for exchanging information with the radio frequency apparatus 122. The interface is, for example, a common public radio interface (Common Public Radio Interface, CPRI).

Specifically, the network-side device in the embodiments of this application further includes: instructions or programs stored on the memory 125 and executable on the processor 124. The processor 124 invokes the instructions or programs in the memory 125 to perform the method performed by each module shown in FIG. 9 and to achieve the same technical effect, which is not described herein again to avoid repetition.

The embodiments of this application further provide a readable storage medium. The readable storage medium stores programs or instructions. The programs or instructions, when executed by a processor, implement the various processes of the foregoing positioning method embodiments and achieve the same technical effect, which is not described herein again to avoid repetition.

The processor is a processor in the terminal in the foregoing embodiments. The readable storage medium includes a computer-readable storage medium such as a read-only memory (Read-Only Memory, ROM), a random access memory (Random Access Memory, RAM), a magnetic disk, or an optical disc.

The embodiments of this application also provide a chip. The chip includes a processor and a communication interface. The communication interface is coupled to the processor. The processor is configured to execute programs or instructions to implement the various processes of the foregoing positioning method embodiments and achieve the same technical effect, which is not described herein again to avoid repetition.

It is to be understood that the chip referred to in the embodiments of this application may also be referred to as a system-on-chip, and the like.

The embodiments of this application further provide a computer program product. The computer program product is stored in a non-transient storage medium. The computer program product is executed by at least one processor to implement the various processes of the foregoing positioning method embodiments and achieve the same technical effect, which is not described herein again to avoid repetition.

It is to be noted that the terms "include", "comprise", or any other variation thereof in this specification is intended to cover a non-exclusive inclusion, whereby a process, method, object, or apparatus including a series of elements not only includes those elements, but also includes other elements that are not explicitly listed, or also includes elements inherent to such process, method, object, or apparatus. Without more limitations, elements defined by the sentence "including a" does not exclude that there are still other same elements in the process, method, object, or apparatus. Furthermore, it is to be noted that the scope of the methods and apparatuses in the implementations of this application is not limited to performing functions in the order shown or discussed, but may also include performing functions in a substantially simultaneous manner or in reverse order depending on the functions involved. For example, the described methods may be performed in a different order than described, and various steps may be added, omitted, or combined. In addition, features described in some examples may also be combined in other examples.

According to the descriptions in the above implementations, a person skilled in the art may clearly learn that the method according to the foregoing embodiments may be implemented by relying on software and a general hardware platform or by using hardware. But in many cases, the former is a preferred implementation. Based on such an understanding, the technical solutions of this application essentially, or the part contributing to the prior art, may be presented in the form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the various embodiments of this application.

In the embodiments provided in this application, it is to be understood that the disclosed apparatus and method may be implemented in other manners. For example, the described apparatus embodiment is merely an example. For example, the unit division is merely a logical function division and may be other division during actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated. The components displayed as units may or may not be physical units, and may be located in one place or may be distributed over multiple network units. Some or all of the units may be selected according to actual needs to achieve the objects of this embodiment.

In addition, functional units in the embodiments of this application may be integrated into one processing unit, or each of the units may be physically separated, or two or more units may be integrated into one unit.

If the function is implemented in the form of a software functional unit and sold or used as an independent product, the function may be stored in a computer-readable storage medium. Based on such an understanding, the technical solutions of this application essentially, or the part contributing to the related art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the various embodiments of this application. But the foregoing storage medium includes: a USB flash drive, a mobile hard disk, a ROM, a RAM, a magnetic disk or an optical disc, and other media which may store program codes.

The embodiments of this application have been described above with reference to the accompanying drawings. This application is not limited to the foregoing specific implementations, and the foregoing specific implementations are merely exemplary and not limitative. A person of ordinary skill in the art may make various forms under the teaching of this application without departing from the spirit of this application and the protection scope of the claims, and such forms shall all fall within the protection scope of this application.

## Claims

1. A positioning method, comprising:
performing, by a terminal, a positioning behavior in an idle state or an inactive state, wherein performing the positioning behavior comprises at least one of the following:
receiving and measuring a downlink reference signal for positioning;
reporting information related to location; and
transmitting an uplink reference signal for positioning.

2. The method according to claim 1, further comprising:
receiving, by the terminal, first indication information in the idle state or the inactive state, the first indication information comprising at least one of the following:
availability information of a reference signal for positioning or availability information of configuration information of the reference signal for positioning; and
update information of configuration information of a reference signal for positioning,
wherein the reference signal for positioning comprises at least one of the following: the uplink reference signal for positioning and the downlink reference signal for positioning.

3. The method according to claim 2, wherein after receiving, by the terminal, the first indication information in the idle state or the inactive state, the method further comprises:
in a case that the first indication information indicates that the reference signal for positioning is unavailable, assuming, by the terminal, that the reference signal for positioning is not present, or that the reference signal for positioning is transmitted, or that the reference signal for positioning is stopped from being transmitted, or that the terminal does not transmit the reference signal for positioning, or that the terminal stops transmitting the reference signal for positioning;
or
in a case that the first indication information indicates that the configuration information of the reference signal for positioning is unavailable, assuming, by the terminal, that the reference signal for positioning corresponding to the configuration information of the reference signal for positioning is not present, or that the reference signal for positioning corresponding to the configuration information of the reference signal for positioning is not transmitted, or that the reference signal for positioning corresponding to the configuration information of the reference signal for positioning is stopped from being transmitted, or that the terminal does not transmit the reference signal for positioning corresponding to the configuration information of the reference signal for positioning, or that the terminal stops transmitting the reference signal for positioning corresponding to the configuration information of the reference signal for positioning.

4. The method according to claim 2, wherein the update information of the configuration information of the reference signal for positioning comprises at least one of the following:
indication information for indicating whether the configuration information of the reference signal for positioning is updated; and
updated configuration information of the reference signal for positioning.

5. The method according to claim 4, wherein the indication information for indicating whether the configuration information of the reference signal for positioning is updated or the updated configuration information of the reference signal for positioning comprises at least one of the following:
on or off of the configuration information of the reference signal for positioning;
increase or decrease of a bandwidth of the reference signal for positioning;
increase or decrease of a period of the reference signal for positioning;
change of muting configuration of the reference signal for positioning;
change of spatial relation configuration of the reference signal for positioning; and
change of path loss configuration of the reference signal for positioning.

6. The method according to claim 2, wherein the reference signal for positioning indicated by the first indication information is one of the following granularities:
reference signals for positioning corresponding to one or more groups of the configuration information of the reference signal for positioning;
one or more reference signal for positioning resources;
one or more reference signal for positioning resource sets;
one or more reference signals for positioning under a transmitting receiving point TRP;
reference signals for positioning under one or more frequency layers; and
reference signals for positioning under all frequency layers.

7. The method according to claim 2, wherein receiving, by the terminal, the first indication information in the idle state or the inactive state comprises at least one of the following:
obtaining, by the terminal, the first indication information in a paging physical downlink control channel PDCCH;
obtaining, by the terminal, the first indication information in a paging physical downlink shared channel PDSCH scheduled by the paging PDCCH;
obtaining, by the terminal, the first indication information in a paging early indication;
obtaining, by the terminal, the first indication information during a random access process or a small data transmission process;
obtaining, by the terminal, the first indication information in a broadcast message;
obtaining, by the terminal, the first indication information in a radio resource control RRC release message;
obtaining, by the terminal, the first indication information in a PDCCH and/or a PDSCH according to a downlink monitoring occasion and/or a monitoring window configured by a network-side device; and
obtaining, by the terminal, the first indication information from a downlink scheduling resource PDSCH configured by the network-side device.

8. The method according to claim 7, wherein the first indication information is represented by bits of a short message in the paging PDCCH or by reserved bits in the paging PDCCH.

9. The method according to claim 7, wherein the terminal obtains indication information for indicating whether the configuration information of the reference signal for positioning is updated in the paging PDCCH, and obtains updated configuration information of the reference signal for positioning in the paging PDSCH scheduled by the paging PDCCH.

10. The method according to claim 2, wherein the first indication information further comprises indication information for indicating whether to enter a connected state and to update the configuration information of the reference signal for positioning.

11. The method according to claim 10, wherein after receiving, by the terminal, the first indication information in the idle state or the inactive state, the method further comprises: in a case that the first indication information comprises the indication information for indicating whether to enter the connected state and to update the configuration information of the reference signal for positioning or the first indication information does not comprise indication information for indicating that the connected state is not entered to update the configuration information of the reference signal for positioning, initiating, by the terminal, a random access to enter the connected state and to update the configuration information of the reference signal for positioning.

12. The method according to claim 2 or 10, wherein after receiving, by the terminal, the first indication information in the idle state or the inactive state, the method further comprises:
transmitting, by the terminal, first feedback information, the first feedback information being used for indicating that the first indication information has been received.

13. The method according to claim 12, wherein the first feedback information is transmitted in the idle state or the inactive state or transmitted after the terminal enters the connected state.

14. The method according to claim 12, wherein the first feedback information comprises at least one of the following:
a feedback reason, the feedback reason comprising at least one of the following: a feedback indicated by availability of the reference signal for positioning, an update feedback of the configuration information of the reference signal for positioning, and an update feedback of the configuration information of the reference signal for positioning initiated by the network-side device; and
an update response to the configuration information of the reference signal for positioning, the update response being used for responding to indication information, in the first indication information, for indicating whether the configuration information of the reference signal for positioning is updated.

15. The method according to claim 12, wherein after transmitting, by the terminal, the first feedback information, the method further comprises:
receiving, by the terminal, updated configuration information of the reference signal for positioning.

16. The method according to claim 15, wherein receiving, by the terminal, the updated configuration information of the reference signal for positioning comprises one of the following manners:
obtaining, by the terminal, the updated configuration information of the reference signal for positioning in an RRC release message;
obtaining, by the terminal, the updated configuration information of the reference signal for positioning in a PDSCH scheduled by a PDCCH scrambled by a cell radio network temporary identifier C-RNTI; and
receiving, by the terminal, the updated configuration information of the reference signal for positioning after entering the connected state.

17. The method according to claim 1, wherein the receiving and measuring a downlink reference signal for positioning comprises:
in a case that the terminal is configured with an initial downlink bandwidth part BWP, performing, by the terminal, one of the following:
receiving the downlink reference signal for positioning inside of the initial downlink BWP;
receiving a downlink reference signal for positioning with the same parameter configuration as the initial downlink BWP inside of the initial downlink BWP;
in a case that the downlink reference signal for positioning and a first signal are repeated or collided or transmitted in the same symbol, skipping receiving, by the terminal, the downlink reference signal for positioning, the first signal comprising at least one of the following: SIB 1, other SIBs than SIB 1, Msg2, MSg4, MsgB, a PDCCH scheduling SIB1, and a synchronization signal block SSB;
receiving, by the terminal, the downlink reference signal for positioning outside of the initial downlink BWP; and
performing, by the terminal, BWP handover according to an indication from the network-side device, a protocol agreement, or a selection of the terminal, and receiving the downlink reference signal for positioning on the BWP after handover.

18. The method according to claim 1, wherein the information related to location comprises: second indication information, the second indication information being used for indicating information about subsequent data transmission, and the information about the subsequent data transmission comprising at least one of the following:
whether there is the subsequent data transmission;
a size of the subsequent data transmission;
a period of the subsequent data transmission;
whether an ACK feedback is required for the subsequent data transmission;
service characteristics of data to be transmitted subsequently; and
a type of the data to be transmitted subsequently, the type comprising at least one of the following: data related to positioning or data related to non-positioning, control plane data or user plane data, and data in signaling radio bearer, in non-access stratum or in data radio bearer.

19. The method according to claim 18, wherein after reporting the information related to location, the method further comprises:
transmitting the data to be transmitted subsequently on a PUSCH scheduled by a PDCCH configured by a network-side device.

20. The method according to claim 1, further comprising:
transmitting, by the terminal, third indication information, the third indication information being used for indicating that configuration information of a reference signal for positioning needs to be updated, and the reference signal for positioning comprising at least one of an uplink reference signal for positioning and a downlink reference signal for positioning.

21. The method according to claim 20, wherein the third indication information is transmitted in a small data transmission SDT manner or transmitted after the terminal enters a connected state.

22. The method according to claim 20, wherein the third indication information further comprises: a reason for transmitting the third indication information, the reason comprising at least one of the following:
the terminal initiates an update of configuration information of the reference signal for positioning;
update of the configuration information of the reference signal for positioning; and
the configuration information of the reference signal for positioning is unavailable.

23. The method according to claim 20, wherein the third indication information further comprises at least one of the following:
an RRM measurement result of a serving cell;
an RRM measurement result of a neighboring cell;
a measurement result of a reference signal for positioning of the serving cell; and
a measurement result of a reference signal for positioning of the neighboring cell.

24. The method according to claim 23, wherein the measurement result comprises at least one of the following: a reference signal identifier, measurement results of N best beams higher than a threshold, indicators of N best beams higher than the threshold, a measurement result of an optimal beam, an indicator of an optimal beam, measurement results of N beams with the strongest RSRP of first arrival path, indicators of N beams with the strongest RSRP of first arrival path, and N is defined by protocol, indicated by the network-side device or selected by the terminal.

25. The method according to claim 20, wherein transmitting, by the terminal, the third indication information comprises:
transmitting, by the terminal, the third indication information in a case that at least one of the following conditions is satisfied:
transmitting the third indication information in a case that the terminal detects that adjustment of a tracking area exceeds a first tracking area threshold and the terminal does not enter a connected state;
transmitting the third indication information in a case that the terminal detects that a difference between two consecutive first measurement values exceeds a first measurement threshold and the terminal does not enter the connected state, the first measurement value comprising at least one of the following: measurement information of an SSB, measurement information of paging or Msg2 or Msg4 or MsgB, and measurement information of the reference signal for positioning;
transmitting the third indication information in a case that the terminal detects that a second timer expires and the terminal does not enter a connected state;
transmitting the third indication information in a case that handover of the resident cell of the terminal is implemented;
transmitting the third indication information in a case that handover of the resident cell of the terminal is implemented and that the downlink reference signal for positioning is not receivable, the information related to location is not reportable or the uplink reference signal for positioning is not transmittable; and
transmitting the third indication information in a case that the terminal moves out of a pre-configured valid area of the configuration information of the reference signal for positioning.

26. The method according to claim 20, wherein after transmitting, by the terminal, the third indication information, the method further comprises:
receiving, by the terminal, first indication information in the idle state or the inactive state, the first indication information comprising at least one of the following:
availability information of a reference signal for positioning or availability information of configuration information of the reference signal for positioning; and
update information of configuration information of a reference signal for positioning,
wherein the reference signal for positioning comprises at least one of the following: the uplink reference signal for positioning and the downlink reference signal for positioning.

27. The method according to claim 1, wherein the reporting information related to location comprises: reporting measurement information, the measurement information comprising at least one of the following:
an RRM measurement result of a serving cell;
an RRM measurement result of a neighboring cell;
a measurement result of a reference signal for positioning of the serving cell; and
a measurement result of a reference signal for positioning of the neighboring cell.

28. The method according to claim 27, wherein reporting the measurement information in an SDT manner.

29. The method according to claim 1, wherein transmitting the uplink reference signal for positioning comprises:
transmitting an aperiodic SRS or a semi-persistent SRS.

30. The method according to claim 29, wherein transmitting the aperiodic SRS comprises at least one of the following:
transmitting the aperiodic SRS triggered by a PDCCH scrambled by a C-RNTI; and
transmitting the aperiodic SRS by the PDCCH scrambled by the C-RNTI and/or after contention resolution is successful and before an RRC release message.

31. The method according to claim 29, wherein before transmitting the uplink reference signal for positioning, the method further comprises:
transmitting, by the terminal, request information in an SDT manner, the request information being used for requesting a network-side device to trigger the aperiodic SRS or activate the semi-persistent SRS, and the request information comprising at least one of the following:
an aperiodic SRS trigger request or a semi-persistent SRS activation request;
an uplink positioning request; and
event information.

32. The method according to claim 31, wherein transmitting the request information in the SDT manner comprises:
transmitting the request information in the SDT manner in a case that an event occurs, the event comprising at least one of the following: an area event and an action event.

33. The method according to claim 1, further comprising:
transmitting, by the terminal, fourth indication information, the fourth indication information being used for indicating timing change of the uplink reference signal for positioning.

34. The method according to claim 33, wherein the fourth indication information further comprises:
an amount of the timing change of the uplink reference signal for positioning;
a cause of the timing change of the uplink reference signal for positioning, the cause comprising at least one of the following: handover of a resident cell or cell reselection of the terminal, automatic adjustment of timing of the uplink reference signal for positioning by the terminal, and receiving of a timing advance (Timing advance) command from the resident cell by the terminal.

35. The method according to claim 33, wherein transmitting, by the terminal, the fourth indication information comprises:
transmitting the fourth indication information in a case that at least one of the following conditions is satisfied:
handover of a resident cell or cell reselection of the terminal;
automatic adjustment of timing of the uplink reference signal for positioning by the terminal; and
receiving of a timing advance (Timing advance) command from the resident cell by the terminal.

36. The method according to claim 1, further comprising:
transmitting, by the terminal, fifth indication information, the fifth indication information being used for indicating change of a resident cell.

37. The method according to claim 36, wherein the fifth indication information further comprises identification information of the resident cell.

38. The method according to claim 36, wherein transmitting, by the terminal, the fifth indication information comprises:
transmitting the fifth indication information in a case that handover of the resident cell of the terminal is implemented.

39. The method according to claim 36, further comprising:
initiating, by the terminal, a random access to enter a connected state or transmitting third indication information, in a case that handover of the resident cell of the terminal is implemented and the terminal is incapable of performing at least one of the following behaviors:
transmitting an uplink reference signal for positioning;
measuring a downlink reference signal for positioning; and
reporting information related to location,
wherein the third indication information is used for indicating that configuration information of a reference signal for positioning needs to be updated, and the reference signal for positioning comprises at least one of the uplink reference signal for positioning and the downlink reference signal for positioning.

40. The method according to claim 1, wherein performing, by the terminal, the positioning behavior in the idle state or the inactive state further comprises at least one of the following:
in a case that a distance between a time domain location of an uplink reference signal for positioning to be transmitted and a paging occasion exceeds a distance X, ignoring, by the terminal, the uplink reference signal for positioning to be transmitted;
in a case that a distance between a time domain location of a downlink reference signal for positioning and the paging occasion exceeds the distance X, ignoring, by the terminal, measurement of the downlink reference signal for positioning;
in a case that a distance between a time domain location where information related to location is reported and the paging occasion exceeds the distance X, ignoring, by the terminal, reporting of the information related to location; and
in a case that a distance between the time domain location of the uplink reference signal for positioning to be transmitted and the time domain location of the downlink reference signal for positioning exceeds the distance X, ignoring, by the terminal, the uplink reference signal for positioning to be transmitted.

41. The method according to claim 40, wherein the paging occasion is a paging occasion in a resident cell.

42. The method according to claim 1, wherein the receiving and measuring a downlink reference signal for positioning comprises:
receiving and measuring the downlink reference signal for positioning according to a spatial beam relation between the downlink reference signal for positioning and an SSB,
wherein the spatial beam relation between the downlink reference signal for positioning and the SSB is obtained by a spatial QCL relation, indicated by a network-side device, between the downlink reference signal for positioning and the SSB; or, obtained by a default relation between a downlink reference signal for positioning resource and an SSB actually transmitted in synchronization signal block burst under a TRP where the downlink reference signal for positioning resource is located.

43. A positioning method, comprising:
performing, by a terminal, a positioning behavior in an idle state, an inactive state, or a connected state, wherein performing the positioning behavior comprises: reporting information related to location, the information related to location comprising an association relation between a positioning measurement result and a timing error group, and/or, an association relation between an uplink reference signal for positioning and the timing error group.

44. The method according to claim 43, wherein the association relation between the uplink reference signal for positioning and the timing error group is contained in the positioning measurement result in a downlink and uplink positioning method.

45. A positioning method, comprising:
performing, by a network-side device, a positioning behavior, wherein performing the positioning behavior comprises at least one of the following:
transmitting a downlink reference signal for positioning to a terminal in an idle state or an inactive state;
receiving information related to location reported by the terminal in the idle state or the inactive state; and
measuring an uplink reference signal for positioning transmitted by the terminal in the idle state or the inactive state.

46. The method according to claim 45, further comprising:
transmitting, by the network-side device, first indication information to the terminal in the idle state or the inactive state, the first indication information comprising at least one of the following:
availability information of a reference signal for positioning or availability information of configuration information of the reference signal for positioning; and
update information of configuration information of a reference signal for positioning,
wherein the reference signal for positioning comprises at least one of the following: the uplink reference signal for positioning and the downlink reference signal for positioning.

47. The method according to claim 46, wherein the update information of the configuration information of the reference signal for positioning comprises at least one of the following:
indication information for indicating whether the configuration information of the reference signal for positioning is updated; and
updated configuration information of the reference signal for positioning.

48. The method according to claim 46, wherein the first indication information further comprises indication information for indicating whether to enter a connected state and to update the configuration information of the reference signal for positioning.

49. The method according to claim 46, wherein after transmitting, by the network-side device, the first indication information to the terminal in the idle state or the inactive state, the method further comprises:
receiving, by the network-side device, first feedback information transmitted by the terminal, the first feedback information being used for indicating that the first indication information has been received.

50. The method according to claim 49, wherein the first feedback information comprises at least one of the following:
a feedback reason, the feedback reason comprising at least one of the following: a feedback indicated by availability of the reference signal for positioning, an update feedback of the configuration information of the reference signal for positioning, and an update feedback of the configuration information of the reference signal for positioning initiated by the network-side device; and
an update response to the configuration information of the reference signal for positioning, the update response being used for responding to indication information, in the first indication information, for indicating whether the configuration information of the reference signal for positioning is updated.

51. The method according to claim 49, wherein after receiving, by the network-side device, the first feedback information transmitted by the terminal, the method further comprises:
transmitting, by the network-side device, updated configuration information of the reference signal for positioning to the terminal.

52. The method according to claim 50, wherein the information related to location comprises: second indication information, the second indication information being used for indicating information about subsequent data transmission, and the information about the subsequent data transmission comprising at least one of the following:
whether there is the subsequent data transmission;
a size of the subsequent data transmission;
a period of the subsequent data transmission;
whether an ACK feedback is required for the subsequent data transmission;
service characteristics of data to be transmitted subsequently; and
a type of the data to be transmitted subsequently, the type comprising at least one of the following: data related to positioning or data related to non-positioning, control plane data or user plane data, and data in signaling radio bearer, in non-access stratum or in data radio bearer.

53. The method according to claim 52, further comprising:
receiving, by the network-side device, the data to be transmitted subsequently on a PUSCH scheduled by a PDCCH configured by the network-side device.

54. The method according to claim 45, further comprising:
receiving, by the network-side device, third indication information transmitted by the terminal, the third indication information being used for indicating that configuration information of a reference signal for positioning needs to be updated, and the reference signal for positioning comprising at least one of an uplink reference signal for positioning and a downlink reference signal for positioning.

55. The method according to claim 54, wherein the third indication information further comprises: a reason for transmitting the third indication information, the reason comprising at least one of the following: the terminal initiates update of the configuration information of the reference signal for positioning, update of the configuration information of the reference signal for positioning, and the configuration information of the reference signal for positioning is unavailable.

56. The method according to claim 54, wherein the third indication information further comprises at least one of the following:
an RRM measurement result of a serving cell;
an RRM measurement result of a neighboring cell;
a measurement result of a reference signal for positioning of the serving cell; and
a measurement result of a reference signal for positioning of the neighboring cell.

57. The method according to claim 54, wherein after receiving, by the network-side device, the third indication information transmitted by the terminal, the method further comprises:
transmitting first indication information to the terminal, the first indication information comprising at least one of the following:
availability information of a reference signal for positioning or availability information of configuration information of the reference signal for positioning; and
update information of configuration information of a reference signal for positioning,
wherein the reference signal for positioning comprises at least one of the following: the uplink reference signal for positioning and the downlink reference signal for positioning.

58. The method according to claim 45, wherein the information related to location comprises: measurement information, the measurement information comprising at least one of the following:
an RRM measurement result of a serving cell;
an RRM measurement result of a neighboring cell;
a measurement result of a reference signal for positioning of the serving cell; and
a measurement result of a reference signal for positioning of the neighboring cell.

59. The method according to claim 45, wherein the uplink reference signal for positioning comprises: an aperiodic SRS or a semi-persistent SRS.

60. The method according to claim 45, further comprising:
receiving, by the network-side device, fourth indication information transmitted by the terminal, the fourth indication information being used for indicating timing change of the uplink reference signal for positioning.

61. The method according to claim 45, further comprising:
receiving, by the network-side device, fifth indication information transmitted by the terminal, the fifth indication information being used for indicating change of a resident cell.

62. The method according to claim 45, wherein receiving the information related to location reported by the terminal in the idle state or the inactive state comprises:
receiving an association relation, reported by the terminal in the idle state or the inactive state, between a positioning measurement result and a timing error group, and/or, an association relation between an uplink reference signal for positioning and the timing error group.

63. A positioning method, comprising:
performing, by a network-side device, a positioning behavior, wherein performing the positioning behavior comprises:
receiving information related to location reported by a terminal in an idle state or an inactive state, the information related to location comprising an association relation between a positioning measurement result and a timing error group, and/or, an association relation between an uplink reference signal for positioning and the timing error group.

64. A positioning apparatus, comprising:
a positioning module, configured to perform a positioning behavior in an idle state or an inactive state, wherein performing the positioning behavior comprises at least one of the following:
receiving and measuring a downlink reference signal for positioning;
reporting information related to location; and
transmitting an uplink reference signal for positioning.

65. A positioning apparatus, comprising:
a positioning module, configured to perform a positioning behavior in an idle state, an inactive state, or a connected state, wherein performing the positioning behavior comprises: reporting information related to location, the information related to location comprising an association relation between a positioning measurement result and a timing error group, and/or, an association relation between an uplink reference signal for positioning and the timing error group.

66. A positioning apparatus, comprising:
a positioning module, configured to perform a positioning behavior, wherein performing the positioning behavior comprises at least one of the following:
transmitting a downlink reference signal for positioning to a terminal in an idle state or an inactive state;
receiving information related to location reported by the terminal in the idle state or the inactive state; and
measuring an uplink reference signal for positioning transmitted by the terminal in the idle state or the inactive state.

67. A positioning apparatus, comprising:
a positioning module, configured to perform a positioning behavior, wherein performing the positioning behavior comprises:
receiving information related to location reported by a terminal in an idle state or an inactive state, the information related to location comprising an association relation between a positioning measurement result and a timing error group, and/or, an association relation between an uplink reference signal for positioning and the timing error group.

68. A terminal, comprising a processor, a memory, and programs or instructions stored in the memory and executable on the processor, wherein the programs or instructions, when executed by the processor, implement steps of the positioning method according to any one of claims 1 to 42; or, the programs or instructions, when executed by the processor, implement steps of the positioning method according to claim 43 or 44.

69. A network-side device, comprising a processor, a memory, and programs or instructions stored in the memory and executable on the processor, wherein the programs or instructions, when executed by the processor, implement steps of the positioning method according to any one of claims 45 to 62, or, the programs or instructions, when executed by the processor, implement steps of the positioning method according to claim 63.

70. A readable storage medium, the readable storage medium storing programs or instructions, wherein the programs or instructions, when executed by a processor, implement the positioning method according to any one of claims 1 to 42, or, the programs or instructions, when executed by the processor, implement the positioning method according to claim 43 or 44, or, the programs or instructions, when executed by the processor, implement steps of the positioning method according to any one of claims 45 to 62, or, the programs or instructions, when executed by the processor, implement steps of the positioning method according to claim 63.

71. A chip, comprising a processor and a communication interface, wherein the communication interface is coupled to the processor, and the processor is configured to execute programs or instructions, so as to implement the positioning method according to any one of claims 1 to 42, or to implement the positioning method according to claim 43 or 44, or to implement steps of the positioning method according to any one of claims 45 to 62, or to implement steps of the positioning method according to claim 63.

72. A computer program product, the computer program product being stored in a nontransient storage medium, and the computer program product being executed by at least one processor to implement the positioning method according to any one of claims 1 to 42, or to implement the positioning method according to claim 43 or 44, or to implement steps of the positioning method according to any one of claims 45 to 62, or to implement steps of the positioning method according to claim 63.

73. A communication device, configured to perform the positioning method according to any one of claims 1 to 42, or to perform the positioning method according to claim 43 or 44, or to perform steps of the positioning method according to any one of claims 45 to 62, or to perform steps of the positioning method according to claim 63.
